Europäisches Patentamt

European Patent Office

Office européen des brevets

(19)

(11) **EP 1 603 342 A1**

(12) **EUROPEAN PATENT APPLICATION**
published in accordance with Art. 158(3) EPC

(43) Date of publication:
**07.12.2005 Bulletin 2005/49**

(21) Application number: **04714031.4**

(22) Date of filing: **24.02.2004**

(51) Int Cl.⁷: **H04N 7/30**, H04N 1/41,
H03M 7/30, H04S 7/00,
H04R 3/00, H04R 5/027,
G06T 17/40, G06T 3/00,
G10L 19/00

(86) International application number:
**PCT/JP2004/002120**

(87) International publication number:
**WO 2004/080082 (16.09.2004 Gazette 2004/38)**

(84) Designated Contracting States:
**AT BE BG CH CY CZ DE DK EE ES FI FR GB GR
HU IE IT LI LU MC NL PT RO SE SI SK TR**
Designated Extension States:
**AL LT LV MK**

(30) Priority: **07.03.2003 JP 2003062294**

(71) Applicant: **SONY CORPORATION
Tokyo 141-0001 (JP)**

(72) Inventor: **NAKAGAWA, Ayato,
Sony Corporation 7-35
Tokyo 141-0001 (JP)**

(74) Representative: **Turner, James Arthur
D Young & Co
120 Holborn
London EC1N 2DY (GB)**

(54) **DATA ENCODING DEVICE AND DATA ENCODING METHOD AND COMPUTER PROGRAM**

(57)     Data mapped on a spherical surface is encoded with a format enabling partial resolution and partial distribution. When data mapped on a spherical surface such as an entire circumference image is subjected to the spherical surface wavelet conversion, scaling coefficients and values of wavelet functions are arrayed for each level in the output data. The spatial scalability such as partial distribution or partial resolution can be realized by rearranging the coefficient $c_k^{(j)}$ in the scaling function $\Phi_k^{(j)}$ and the value $d_{k,m}^{(j)}$ of the wavelet function $\Psi_k^{(j)}$ according to positional relations on the spherical surface.

# F I G . 1

level j=0          j=1          j=2

EP 1 603 342 A1

**Description**

Technical Field

The present invention relates to a data encoder and a data encoding method for encoding particular geographical surface data, and a computer program for the same, and more particularly to a data encoder and a data encoding method for encoding data mapped on a spherical surface, and a computer program for the same.

More specifically, the present invention relates to a data encoder and a data encoding method for encoding data mapped on a spherical surface described with a specified mathematical model, and a computer program for the same. More particularly, this invention relates to an data encoder and a data encoding method for encoding data mapped on a spherical surface with a format enabling partial resolution and partial distribution, and a computer program for the same.

Background Art

There has been known an omnidirectional camera as a device for providing an image of a landscape around a user. This type of omnidirectional imaging system is based on the configuration in which a plurality of cameras are provided as a point in a space as a view point so that an image around the point is picked up. The omnidirectional imaging system executes image processing for generating an image showing a landscape with a visual field substantially wider than that provided by an ordinary camera and looking like an image picked up by a single wide angle camera by connecting appropriately outlines of images which are picked up by the camera and adjacent to each other. In association with recent progress in the field of VR (Virtual Reality) technology, images each providing an image of entire circumference have been rapidly increasing.

On the other hand, there is a strong demand for distributing various types of contents via a distribution medium to remote sites in association with development in the field of information communication technology.

In a case of distribution service for entire circumference image described above, because an entire circumference image is formed by mapping image data on a spherical surface, the data is encoded and converted to a data stream, which is distributed. However, on the receiving side, namely on the side of service users, an omnidirectional image is rarely required, and many users demand images in a specified view angle with higher resolution. Namely, there is a demand for partial distribution of or partial resolution for a specified limited area of an entire circumference image.

In the conventional broadcasting technology such as surface wave broadcasting, satellite broadcasting, cable television broadcasting, and high vision broadcasting, basically one image is received through one channel. In addition, also a view angle of an image is decided previously when the image is recorded on the broadcasting side, and therefore a user receiving the image can not select an image with a desired view angle. In order to enable the user to select a view angle of an omnidirectional image consisting of images picked up by a plurality of cameras, the user is required to simultaneously receive a plurality of images sent through a plurality of channels each sending an image photographed by one camera. To realize the configuration as described above, however, modification of hardware is required, which results in cost increases also in the receiving side.

In a case of data distribution or that via a data delivery or a recording medium, the data volume is vast, so that an entire circumference image formed by mapping pixel data on a spherical surface is required to be encoded with a format suited to compression encoding, namely to be converted to a data stream. Further the encoded data stream should preferably satisfy the needs for partial distribution or partial resolution.

For instance, a spherical surface can be mapped onto a flat surface by making use of the map projection for projecting the globe onto a flat world map.

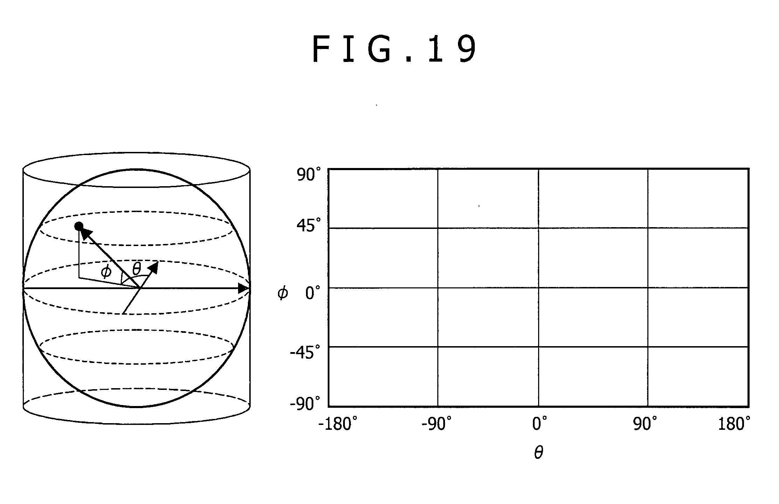

There is a method in which a spherical surface is projected onto a cylindrical surface and then the cylindrical surface is developed to a flat surface as shown in Fig. 19. In the case shown in the figure, an angle in the horizontal direction on the spherical surface is plotted in the lateral direction of a two-dimensional surface, and an angle in the vertical direction on the spherical surface is plotted in the vertical surface of the two-dimensional surface each with an even space. The two-dimensional image mapping information in this case is the angular data allocated to each row and column.

With the mapping method as described above, although there are the advantages that the space and time correlations are high, and that the equation required for converting spherical surface data to two-dimensional surface data, or namely the two-dimensional mapping information is simple, distortion in the upper and lower sections of the mapped two-dimensional plane (namely polar sections in a two-dimensional map) becomes larger (or the density becomes lower in the polar sections as compared to that in the equatorial area). Therefore information included in each pixel can not be preserved equivalent against all directions. In other words, encoded data stream does not satisfy the needs for partial distribution or partial resolution.

The case of data mapping on a spherical surface is not limited to the field of image processing technology such as processing of entire circumference images.

For instance, in the field of acoustics, it has been known based on the Kirchhoff's integral formula that, if it is possible to completely control an acoustic pressure on a surface and a velocity of particles in the normal direction against the surface, it would be possible to completely reproduce an acoustic field in an inner region D of a closed surface S (Refer to, for instance, "Study on reproduction of a wide range acoustic field (1)- Based on Kirchhoff's integral formula", Ise, proceedings for The Acoustical Society of Japan, 1993, Oct.).

In other words, by mapping an acoustic pressure or a particle velocity on a spherical surface, it is possible to reproduce a wide range acoustic field, and an acoustic field in any inner region of a closed surface can be reproduced.

Also in this case, for distributing and transferring audio data via an audio delivery and a medium, there are needs for encoding data mapped on a spherical surface as well as for partial distribution and partial resolution.

Disclosure of Invention

An object of the present invention is to provide an excellent data encoder and an excellent data encoding method making it possible to advantageously encode data mapped on a spherical surface, and a computer program for the same.

Another object of the present invention is to provide an excellent data encoder and an excellent data encoding method making it possible to advantageously encode data mapped on a spherical surface by describing the data through a mathematical model, and a computer program for the same.

Still another object of the present invention is to provide an excellent data encoder and an excellent data encoding method making it possible to advantageously encode data mapped on a spherical surface with a format allowing for partial resolution and partial distribution and a computer program for the same.

The present invention was made in the light of the problems as described above, and provides, in a first embodiment thereof, a data encoder for encoding data mapped on a spherical surface. The data encoder includes a data converter for subjecting data mapped on a spherical surface to the spherical surface wavelet conversion to sequentially generate, for a spherical surface at level 0 at which the spherical surface is approximated to a regular polygon and a spherical surface at level j where triangles each constituting a surface of a polyhedron approximating the spherical surface at level 0 (j: an integral number of 1 or more) is regressively quartered, a coefficient $c_k^{(j)}$ in the scaling function $\Phi_k^{(j)}$ and a value $d_{k,m}^{(j)}$ of the wavelet function $\Psi_k^{(j)}$ (wherein k indicates a coordinate value on a spherical surface. m=1, 2, 3); and a data stream preparing unit for rearranging the coefficient $c_k^{(j)}$ in the scaling function $\Phi_k^{(j)}$ and the value $d_{k,m}^{(j)}$ of the wavelet function $\Psi_k^{(j)}$ according to positional relations on the spherical surface.

The data encoder according to the present invention may further include a unit for encoding the rearranged data stream.

The data converter may output data values mapped on each of triangles constituting a surface of a polyhedron approximating a spherical surface at level 0 and values of the spherical surface wavelet function at each level.

The data encoding unit may rearrange values of the spherical surface wavelet functions at up to level j into a data stream according to coordinates on a spherical surface, divides the data values based on coordinates on the spherical surface to provide places for insertion, and further divides values of the spherical surface wavelet function at level j+1 based on coordinates on the spherical surface to combine the values to the corresponding places for insertions respectively.

Recently the chances for treatment of data mapped on a spherical surface like those for completely reproducing an entire circumference image or an acoustic field have been increasing. In the service for distributing or transferring this type of data, spacial scalability such as efficient compression encoding or partial resolution and convenience in partial distribution needs to be discussed.

The related art-based data compression method has been applicable to data defined with a simple form. Typical forms employed in the related art-based compression method includes linear (such as audio), rectangular (such as images), and three-dimensional luster (such as video) data. However, the data compression technique based on the related art is not suited to compression of data defined on a spherical surface or on other complicated forms.

Also there is the method in which a spherical surface is projected to a cylindrical surface and then the cylindrical surface is developed into a flat surface. In the mapping method described above, the space and time correlations are high and a mathematical equation required for conversion of a spherical surface to a two-dimensional surface, namely the two-dimensional mapping information is simple, which are advantageous. However, distortion in the upper and lower sections (pole portions on a world map) becomes larger (or density becomes lower compared with the vicinity of the equator), and therefore information included in each pixel can not be preserved equivalent for all directions. In other words, the encoded data stream does not satisfy the needs for partial distribution or partial resolution.

To solve the problems as described above, the data encoder according to the present invention rearranges coefficients $c_k^{(j)}$ in the scaling function $\Phi_k^{(j)}$ and values $d_{k,m}^{(j)}$ of the wavelet function $\Psi_k^{(j)}$ as an array reflecting positional relations on a spherical surface to provide a data stream.

For instance, when pixel data including color or brightness is mapped on a spherical surface, the data converting unit subjects the pixel data to the spherical surface wavelet conversion to obtain values of the scaling functions at level 0 and values of the spherical surface wavelet functions at each level. Then the data encoding unit divides the values of the spherical surface wavelet function based on coordinate values on a spherical surface to map the data on each of regular triangles constituting a surface of a polyhedron approximating the spherical surface at level 0, separates the values of scaling function for each of the divided triangles at level 0 and values of the spherical surface wavelet function at the levels for each color component, rearranges the data according to the regular triangles approximating the spherical surface at level 0, arrays and couples the data in order of colors, and further rearranges for each spherical surface wavelet function.

In this step, the data encoding unit arrays four data pieces in succession twice in the same color, so that the same color components succeeds by a prespecified number of samples.

In other words, to describe from a broad point of view, the data encoding unit groups the data samples for each of R, G and B, and also arrays the data samples for each spherical surface wavelet function. By rearranging the data sample as described above, a spacial correlation when variable-length encoding is performed for a specified number of data samples can be utilized.

When data including an acoustic pressure data and data for particle velocities in the normal direction against the surface for reproducing an acoustic field at a given inner region of a spherical surface are mapped on a spherical surface, the data converting unit subjects the data to the spherical surface wavelet conversion to obtain values of the scaling function at level 0 and values of the spherical surface wavelet function at each level. Then the data encoding unit subjects each data dissolved by the spherical surface wavelet conversion to the MDCT conversion to obtain spectrum values for the M sample, arrays the data samples according to regular triangles approximating a spherical surface at a specified level, interleaves the data between the spectrums, and further arrays the data samples for each spherical surface wavelet function. Further the data encoding unit arrays the values of spherical surface wavelet function for each spherical surface wavelet function, and further arrays the data samples according to the order of acoustic pressure and particle velocity in the normal direction. With the operations as described above, when a variable-length encoding is performed for every prespecified number of samples, two correlations, namely a correlation between space and frequency, and time and frequency can be utilized.

The data stream encoding unit may subject a prespecified number of data sample as a macro block to the variable-length encoding and directly couple successive macro blocks each having the same bit length to each other without any header. In this case, because the coefficients $c_k^{(j)}$ of the scaling function $\Phi_k^{(j)}$ and values $d_{k,m}^{(j)}$ of the wavelet function $\Psi_k^{(j)}$ are rearranged into an array reflecting positional relations on a spherical surface, correlation among the samples is conceivable as high, and therefore even when the variable-length encoding is applied to the samples, it can be expected that macro blocks each having the same bit length successively appear. As a result, a length of a bit array can be shortened.

In this step, the data samples may be arrayed in the descending order from that having the largest bit length and sequentially linked to each other. With this operation, byte alignment between a header and a macro block is ensured, which facilitates treatment of the data by hardware and software.

A repetition value and a bit length of a macro block may be stored in the header. A scale factor may be applied to a macro block, and also the scale factor information may be stored in the header.

With the data encoding technique according to the present invention, when a lowest level required for reproduction of data is known and the data can be encoded with sufficiently high encoding code by resolving the data down to the level, also a stream structure starting from the lowest level can be implemented based on the same concept, so that the scalability can be realized.

Further with the data encoding technique according to the present invention, when encoded data is reproduced on the original spherical surface, partial extraction is possible by placing the values of spherical surface wavelet functions reproduced at the next levels at the same positions of the triangles at the current rearrangement levels.

Further with the data encoding technique according to the present invention, different resolutions can be assigned to various portions to be reproduced. For instance, when a face of a person is to be zoomed up, it is required to rearrange only the image data corresponding to the portion. Further different levels of resolution can be assigned to different portions of an entire circumference image itself, if any negative visual effect is not generated. In this case, for reproducing a portion at a lower resolution level, the values of spherical surface wavelet function at a higher level are not necessary, so that a general data volume can be reduced.

The present invention provides, in a second embodiment thereof, a computer program described in the computer-readable form so that processing for encoding data mapped on a spherical surface is executed on a computer system. The computer program includes a data conversion step of subjecting data mapped on a spherical surface to the spherical surface wavelet conversion to sequentially generate, for a spherical surface at level 0 at which the spherical surface is approximated to a regular polygon and a spherical surface at level j where a triangle constituting a surface of a polyhedron approximating the spherical surface at level 0 (j: an integral number of 1 or more) is regressively quartered, a coefficient $c_k^{(j)}$ in the scaling function $\Phi_k^{(j)}$ and a value $d_{k,m}^{(j)}$ of the wavelet function $\Psi_k^{(j)}$ (wherein k indicates a coordinate value on a spherical surface. m=1, 2, 3); and a data stream preparing step of rearranging the coefficient $c_k^{(j)}$ in the scaling function $\Phi_k^{(j)}$ and the value $d_{k,m}^{(j)}$ of the wavelet function $\Psi_k^{(j)}$ according to positional relations on the spherical surface.

The computer program according to the second embodiment of the present invention is described in the computer-readable form so that the prespecified processing can be realized on a computer system. In other words, by installing the computer program according to the second embodiment of the present invention, synergetic effects can be achieved on the computer system, and the same advantages as those provided by the data encoder according to the first embodiment of the present invention can be obtained.

Further objects, features, and advantages of the present invention will be understood from the more detailed descriptions of the embodiments provided below with reference to the related drawings.

Brief Description of Drawings

Fig. 1 is a view illustrating a method of resolving and reconstructing a spherical surface with spherical surface wavelet using the spherical surface Haar base;
Fig. 2 is a view illustrating a general appearance of the spherical surface Haar base;
Fig. 3 is a view schematically showing configuration of a data stream obtained by variable-strength encoding according to one embodiment of the present invention;
Fig. 4 is a view showing a structure of a header;
Fig. 5 is a view illustrating a method of storing macro block data;
Fig. 6 is a view showing an example of ID assignment format to triangles (functional values) resolved from a spherical surface;
Fig. 7 is a view schematically showing configuration of a stream format;
Fig. 8 is a view schematically showing the situation in which values of the spherical surface wavelet function arrayed for each level are rearranged according to coordinate values on a spherical surface;
Fig. 9 is a view showing an array tree structure the array order expressed by the expression (12);
Fig. 10 is a view showing a specific stream structure shown in Fig. 9;
Fig. 11 is a view showing a data array tree structure when the lowest level is 3;
Fig. 12 is a view schematically showing the processing flow for MDCT and IMDCT;
Fig. 13 is a view schematically showing a structure of a data stream having been subjected to the variable-length encoding according to an embodiment of the present invention;
Fig. 14 is a view showing a structure of a header;
Fig. 15 is a view illustrating a method of storing macro block data;
Fig. 16 is a view schematically showing configuration of a stream format;
Fig. 17 is a view showing an example in which triangles are sequentially interleaved between spectrums according to the ID order for $d^2$;
Fig. 18 is a view showing a specific stream structure; and
Fig. 19 is a view illustrating a method of developing data on a spherical surface onto a flat plane (based on the related art).

Best Mode for Carrying out the Invention

An embodiment of the present invention is described below with reference to the related drawings.
An entire circumference image is configured by mapping image information including color and brightness data obtained when viewed from a view point in a space, for instance, with a pin hole lens on a spherical surface around the view point as a center. When the entire circumference image obtained as described above is projected onto a two-dimensional plane (Refer to Fig. 19), distortion in the upper and lower sections (for example, pole portions on a world map) of the two-dimensional plane onto which the data is mapped becomes larger (or the density becomes lower as compared to that near the equator).
To solve the problem which occurs in association with projection onto a flat plane, and also to realize the spacial scalability such as partial resolution or partial distribution, the present invention employs a method of describing an entire circumference image (or other data mapped on a spherical surface) by means of spherical-orthogonal development.
As a method for the spherical-orthogonal development, there can be employed, for instance, a method using the spherical surface harmonic function, or a method using the spherical surface wavelet conversion (Refer to, for instance, "Description of a panorama entire circumference image using the spherical-orthogonal development", Higuchi et. al., 3D Image Conference '99, Session 1-6, pp. 31 to 36, June, 1999).

Since a functional value becomes too large in the method using the spherical surface harmonic function, treatment with double precision real number becomes impossible at a dimension number higher than a prespecified level, and a specific computing method is required.

In contrast, in the method using the spherical surface wavelet conversion, a base obtained by extending the Haar base on a spherical surface is used, so that the reference relation between levels can be simplified. Further computing is simple with flexibility provided, so that an application thereof to a specific application is easy.

In this embodiment, by applying the method using the spherical surface wavelet conversion as the spherical-orthogonal conversion, there is provided an encoding method for data mapped on a spherical surface allowing for compression encoding, spacial scalability such as partial resolution, or partial distribution.

A. Spherical surface wavelet

At first, descriptions are provided for a mathematical model of the spherical surface wavelet using the spherical surface Haar base.

In the spherical surface wavelet using the spherical surface Haar base, at first a spherical surface is approximated with (projected to) a polyhedron configured with a plurality of regular triangles and each regular triangle constituting a surface of the polyhedron is regressively quartered. Further one regular triangle is reconstructed with four regular triangles. A wavelet is a construction block which can quickly resolve data, and switching between the original expression of data and wavelet expression thereof with time proportionate to a volume of data.

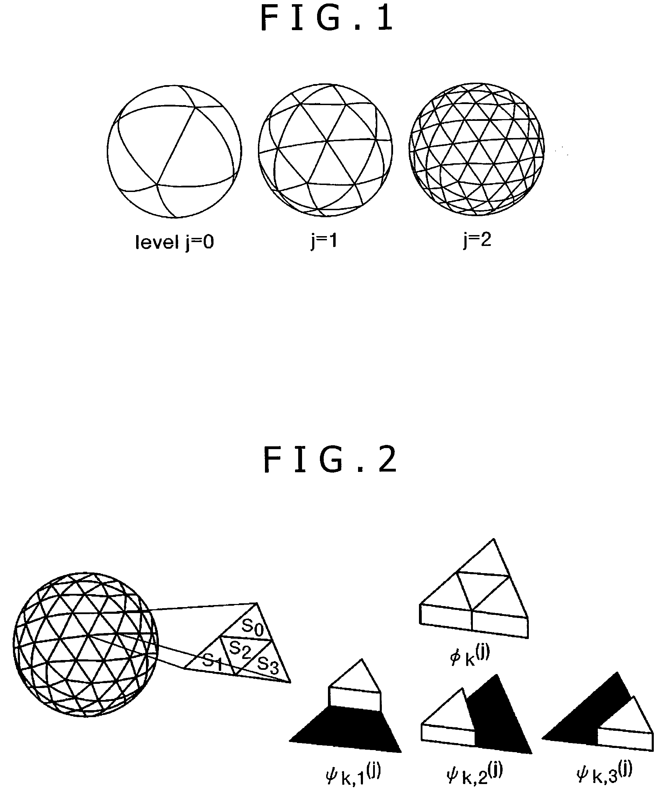

Use of a polyhedron approximating a spherical surface is efficient because the resolution becomes higher as the number of triangles each as a constituent surface becomes larger. For the reason described above, in this embodiment, a spherical surface is approximated (projected) with a regular icosahedron including the maximum number of constituent triangles. In the following descriptions, a level of a triangle constituting a surface of the original icosahedron is defined as level 0, and levels of triangles sequentially obtained by regressively quartering the triangle at level 0 are defined as level 1, level 2, and so forth (Refer to Fig. 1).

The higher the level number is, with more triangles a spherical surface is approximated. In other words, when a triangle obtained by dividing a spherical surface is regarded as a pixel on which image data such as data for color or brightness is mapped, finer images with higher resolution are provided at a higher level, and rougher images with lower resolution are provided at a lower level. For instance, by averaging pixel data for four triangles at level j, a triangle at level j-1 can be obtained. Lowering the level number corresponds to compression encoding of data mapped on a spherical surface, and on the contrary raising the level number corresponds to decoding of data mapped on a spherical surface.

The wavelet is a base function expressing a prespecified function according to a level. The wavelet is generally formed with the scaling function, and a scaling function or a wavelet at a level j can be expressed with linear combination of scaling functions at level j+1 which is finer by one stage in the same form. The scaling function $\Phi_k^{(j)}$ and the wavelet function $\Psi_k^{(j)}$ are defined by the following equations (1) and (2) respectively:

$$\Phi_k^{(j)} = T_j^{(j)} \qquad\qquad (1)$$

$$\Psi_{k,m}^{(j)} = \sum_{i=0}^{3} q_{m,l} \Phi_{4k+1}^{(j+1)} \quad (m = 1,2,3) \quad \cdots (2)$$

In the equations above, k indicates coordinate values on a spherical surface. $T_k^{(j)}$ is a function having value 1 only in a region of a triangle at coordinate k on a spherical surface at level j and value 0 in other regions. Fig. 2 shows a general form of the spherical surface Haar base.

A wavelet is formed with the scaling function, and the scaling function or wavelet at a level j is defined with a linear combination of scaling functions at level j+1 one stage finer (resolved) in the same form. The resolving algorithm for spherical surface wavelet conversion using the spherical surface Haar base is expressed by the following equation (3). Further an algorithm for reconstruction in the spherical surface wavelet conversion is expressed by the following equation (4). With the resolving algorithm, data mapped on a spherical surface is decoded at a finer level, and with the reconstruction algorithm, the data mapped on a spherical surface is encoded to data at a rougher level.

$$c_k^{(j-1)} = \frac{1}{4} \sum_{i=0}^{3} g_l c_{4k+1}^{(j)}$$

$$d_{k,m}^{(j-1)} = \sum_{i=0}^{3} h_{m,l} c_{4k+1}^{(j)} \quad (m = 1,2,3) \cdots (3)$$

$$c_{4k+1}^{(j)} = p_l c_j^{(j-1)} + \sum_{m=0}^{3} q_{m,l} d_{4k+1}^{(j)} \quad (m = 1,2,3) \cdots (4)$$

Herein the progressions $\{g_1\}$, $(h_{m,1})$, $\{p1\}$, $\{q_{m,1}\}$ may be decided based on the two-scale relation and orthogonal conditions as defined by the following equations (5) and (6):

$$\{g_l\}=\{p_l\}=1 \qquad (l=0,1,2,3) \tag{5}$$

$$\begin{bmatrix} h_{1,0} & h_{1,1} & h_{1,2} & h_{1,3} \\ h_{2,0} & h_{2,1} & h_{2,2} & h_{2,3} \\ h_{3,0} & h_{3,1} & h_{3,2} & h_{3,3} \end{bmatrix}$$

$$= \begin{bmatrix} q_{1,0} & q_{1,1} & q_{1,2} & q_{1,3} \\ q_{2,0} & q_{2,1} & q_{2,2} & q_{2,3} \\ q_{3,0} & q_{3,1} & q_{3,3} & q_{3,3} \end{bmatrix}$$

$$= \begin{bmatrix} \dfrac{5}{6} & -\dfrac{1}{6} & -\dfrac{1}{2} & -\dfrac{1}{6} \\ -\dfrac{1}{6} & \dfrac{5}{6} & -\dfrac{1}{2} & -\dfrac{1}{6} \\ -\dfrac{1}{6} & -\dfrac{1}{6} & -\dfrac{1}{2} & \dfrac{5}{6} \end{bmatrix} \cdots (6)$$

From the descriptions above, it is understood that, with a coefficient $c_k^{(j-1)}$ of the scaling function $\Phi_k^{(j-1)}$ which has a level lower by one and values $d_{k,m}^{(j-1)}$ of three different types of the spherical surface wavelet function $\Psi_k^{(j-1)}$, the coefficient $c_k^{(j)}$ of the scaling function $\Phi_k^{(j)}$ can be calculated (provided that m = 1,2,3). The information required for resolving and reconstructing information on a spherical surface at level N by sequentially lowering the levels to level 0 is expressed by the following equation (7):

$$c_k^0 \ (k=0,1...19)$$

$$d_{m,k}^{(j)} \ (m=1,2,3)(k=0,1,...,20 \times 4^{(j)}-1 : j =0,1,...,N-1) \tag{7}$$

The $d_{k,m}^{(j)}$ at each level is expressed as shown below. (j) indicates a level.

$$d_{m,k}^{(0)} \ (m = 1,2,3)(k = 0,1,\cdots,19)$$

$$d^{(1)}_{m,k} \ (m = 1,2,3)(k = 0,1,\cdots,79)(= 20 \times 4 - 1)$$

$$d^{(2)}_{m,k} \ (m = 1,2,3)(k = 0,1,\cdots,319)(= 20 \times 4_2 - 1)$$

.

.

.

Each of the values above corresponds to a pixel value mapped on each triangle constituting a surface of a regular icosahedron approximating a spherical surface at level 0 and a value of the wavelet function at each level. From the equations (4), (5) and (6), the specific algorithm for reconstruction at level 0 is as shown by the following equation (8).

$$c^1_0 = c^0_0 + 5/6 \ d^0_{0,1} - 1/6 \ d^0_{0,2} - 1/6 \ d^0_{0,3} \tag{8}$$

$$c^1_1 = c^0_0 - 1/6 \ d^0_{0,1} + 5/6 \ d^0_{0,2} - 1/6 \ d^0_{0,3}$$

$$c^1_2 = c^0_0 - 1/2 \ d^0_{0,1} - 1/2 \ d^0_{0,2} - 1/2 \ d^0_{0,3}$$

$$c^1_3 = c^0_0 - 1/6 \ d^0_{0,1} - 1/6 \ d^0_{0,2} + 5/6 \ d^0_{0,3}$$

$$c^1_4 = c^0_1 + 5/6 \ d^0_{1,1} - 1/6 \ d^0_{1,2} - 1/6 \ d^0_{1,3}$$

$$c^1_5 = c^0_1 - 1/6 \ d^0_{1,1} + 5/6 \ d^0_{1,2} - 1/6 \ d^0_{1,3}$$

$$c^1_6 = c^0_1 - 1/2 \ d^0_{1,1} - 1/2 \ d^0_{1,2} - 1/2 \ d^0_{1,3}$$

$$c^1_7 = c^0_1 - 1/6 \ d^0_{1,1} - 1/6 \ d^0_{1,2} + 5/6 \ d^0_{1,3}$$

As indicated by the equation (8) above, $c_k^1$ can be generated from $c_k^0$ and $d_{k,m}^0$. By calculating $d_{k,m}^1$ through the equation (4), a value $c_k^2$ can at by one stage higher level be obtained from $c_k^1$.

For the reason described above, the value $c_k^j$ is only required to be at level 0. Namely with $c^0_k$ corresponding to a pixel value at level 0 and a value of the wavelet function at each level, a pixel value at each level can reversibly be encoded.

At a point of time when data mapped on a spherical surface such as entire circumference image data is subjected to a spherical surface wavelet conversion, scaling coefficients and values of wavelet functions are arrayed for each level in the output data. When the data array not corresponding to coordinates on a spherical surface is converted to a data stream as it is, spacial scalability such as partial resolution or convenience of partial distribution can not be obtained. Therefore, in this embodiment, coefficients $c_k^{(j)}$ of the scaling functions $\Phi_k^{(j)}$ arrayed for each level and values $d_{m,k}^{(j)}$ of the wavelet function $\Psi_k^{(j)}$ are rearranged according to the positional relations on a spherical surface to obtain a data stream.

B. High efficient encoding using variable-length encoding

It may be said that the resolution algorithm for spherical surface wavelet conversion allows for division of a spatial frequency. By making use of this characteristic, highly efficient encoding is possible. The present inventor proposes a method of variable-length encoding making use of correlations near coordinates on a spherical surface at each level.

As a representative method for the variable-length encoding, there is the Huffman's coding method or LZ system. These are the methods for encoding characters in a text. In this specification, the present inventor proposes a variable-length encoding system allowing for minimizing required resources on the decoding side, improving adaptability for real time processing, and treatment of 8-bit or more signals.

The capability of treating 8-bit or more signals is required, because also minus values are calculated by spherical surface wavelet conversion and a 9-bit length value may be computed with high probability.

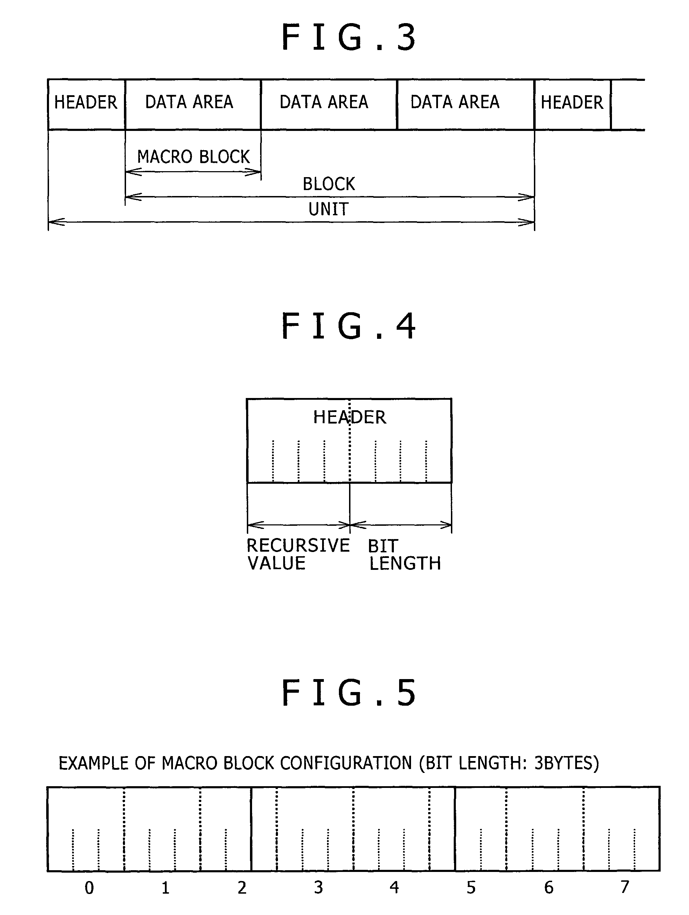

Fig. 3 to Fig. 5 schematically show configuration of a data stream obtained by the variable-length encoding according to the present invention. As shown in the figures, a 1-byte header including meta information is preset at the head, followed by a data area.

In the data area, an area for a signal for eight samples is defined as one macro block, and, when the following macro block has the same bit length, the blocks are directly combined without providing a header. A header includes descriptions of the number of macro blocks repeated before the next header appears and a bit length of the macro block (Refer to Fig. 4). Macro blocks each having the same bit length and a header form one unit.

Fig. 5 illustrates a method of storing data for a macro block. In a macro block, each sample is made to have a byte length equivalent to the largest byte length among eight data samples and is sequentially coupled to each other for storage. In the example shown in the figure, the largest byte length among the eight data samples is 3 bytes. In this case, the total byte length of the macro block as a whole is 3 bytes.

With the configuration as described above, byte alignment between a header and a macro block is ensured, which allows for easy treatment by hardware and software.

In the example shown in Fig. 4, the header has 8-bit length, but a recursive value for the macro block is stored in the former 4 bits. Therefore, even if 16 or more macro blocks having the same bit length appear successively, the maximum number of macro blocks accommodated within one block is 16. Further the bit length of the macro blocks accommodated in the block is stored in the latter four bits.

With the variable-length encoding method as described above, a length of a bit array can be shortened.

Further in this specification, the inventor proposes a method allowing for high efficient encoding by applying a scale factor.

If all of eight data samples in a macro block have the same bit length, 1 byte can be reduced in the macro block.

For instance, when all of eight samples in a macro block have the value in the range from -256 to -129 or in the range from 128 to 255 respectively, all of the samples have the 8-bit length, so that a data area in the macro block is of 8 bytes.

In this case, when a value is positive, 128 is subtracted, and when a value is negative, 128 is added. Thus, a value of each sample in the macro block is in the range from - 128 to -1 < 0 to 127, which can be expressed with 7 bits.

So the scale factor information is stored in the bit length portion of the header.

0 to 9: Bit length without any scale factor

a : Bit-length 4 with a scale factor included

    ...

f : Bit length 9 with a scale factor included.

C. Stream format

By subjecting the values resolved by the spherical surface wavelet conversion to variable-length encoding, a stream format having the following functions is realized:

(1) High efficient encoding
(2) Resolution scalability
(3) Partial extraction of image information

In the spherical surface wavelet conversion, at first, a spherical surface is approximated with (projected to) a polyhedron configured with a plurality of regular triangles, and each regular triangle constituting a surface of the polyhedron is recursively quartered as described above.

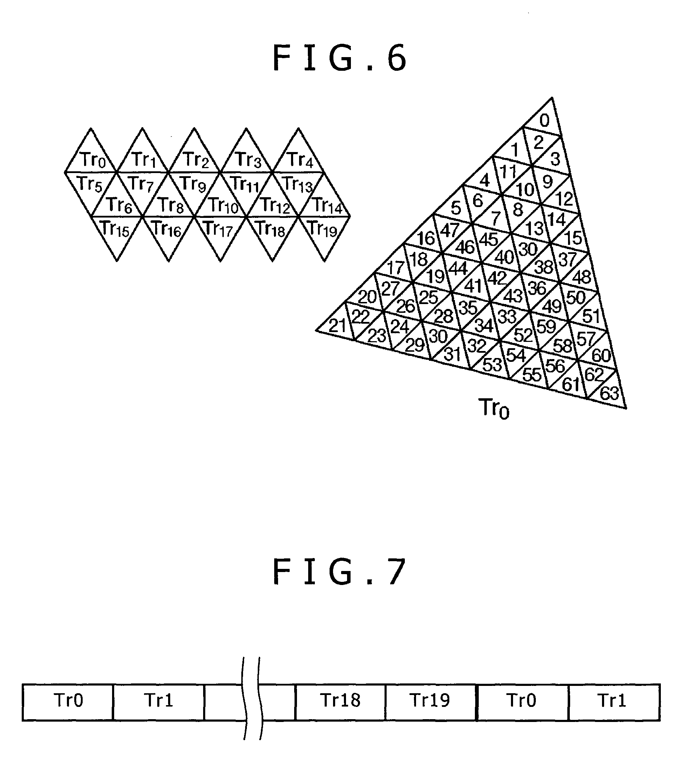

Fig. 6 shows an example of a format for ID allocation to triangles (functional values) resolved from a spherical surface. In the left hand side of the figure, IDs of triangles constituting a surface of a polyhedron approximating a spherical surface at level 0. In the right side of the figure, a principle of allocating an ID when each regular triangle is resolved.

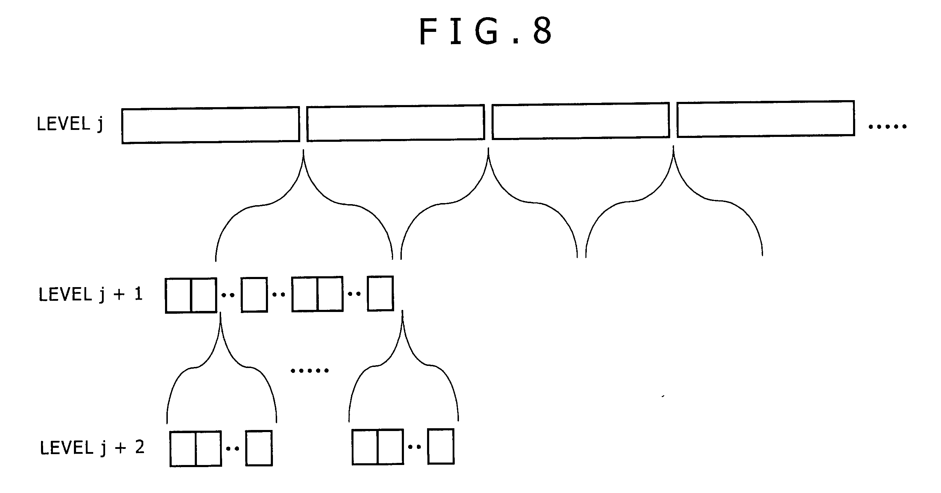

At a point of time when data mapped on a spherical surface such as an entire circumference image is subjected to the spherical surface wavelet conversion, scaling coefficients and values of the wavelet functions are arrayed for each level. In this embodiment, to obtain convenience of scalability of partial resolution or partial distribution, coefficients $c_k^{(j)}$ of scaling functions $\Phi_k^{(j)}$ arrayed for each level and values $d_{m,k}^{(j)}$ are rearranged according to positional relations on a spherical surface for constructing a data stream. For this purpose, values $d_{m,k}^{(j)}$ of the wavelet function $\Phi_k^{(j)}$ at each level obtained through the spherical surface wavelet conversion are divided based on coordinates on a spherical surface according to regular triangles Tr1, Tr2, ... at level 0 (Refer to Fig. 7). Then at level j+1, values of the spherical surface wavelet function divided for the triangles Tr1, Tr2, ... are combined to the spherical surface wavelet function from the rear side for each corresponding regular triangle at level j (Refer to Fig. 8).

For instance, when data mapped on a spherical surface is image information such as entire circumference image, information included in regular triangles Tr1, Tr2, ⋯ are scaling coefficients at level 0, namely R, G, and B values. The values resolved by the spherical surface wavelet conversion are further allocated to the regular triangles Tr1, Tr2, ⋯ Tr19 according to coordinates on the spherical surface and combined to each other as described below. N indicates the maximum number of levels.

$$c^0[R,G,B]$$

$$d^0 0[R,G,B], d^0 1[R,G,B], d^0 2[R,G,B]$$

$$d^1 0[R,G,B]\_k, d^1 1[R,G,B]\_k, d^1 2[R,G,B]\_k \qquad (k=0,1,2,3)$$

.

.

.

$$d^{N-1} 0[R,G,B]\_k, d^{N-1} 1[R,G,B]\_k, d^{N-1} 2[R,G,B]\_k \qquad (k=0,1,2,3,\cdots,4^N-1)$$

Descriptions are described below for a format of a data stream for each regular triangle Tr.

The expression (9) shows an array of information to be stored when the maximum number of levels is N.

$$
\begin{aligned}
&c^0\big[R,G,B\big] \\
&d^0\big[3\big]\big[R,G,B\big] \\
&d^1\big[3\big]\big[4\big]\big[R,G,B\big] \\
&d^2\big[3\big]\big[16\big]\big[R,G,B\big] \qquad \cdots(9) \\
&d^3\big[3\big]\big[64\big]\big[R,G,B\big] \\
&\qquad\qquad \vdots \\
&d^{N-1}\big[3\big]\big[4^N\big]\big[R,G,B\big]
\end{aligned}
$$

In the expression above, d*[3] corresponds to three types of spherical surface wavelet functions. An array located at a center of d1 and on is an ID for a divided triangle.

Herein, at first, values of the scaling function at level 0 of each divided triangle and values of spherical surface wavelet functions at levels 0 to N-1 are separated from each other for each of R, G and B color components and arrayed according to the ID order, namely according to coordinates on the spherical surface, and are combined to each to other in the order of R, G, and B.

With the operations as described above, spatial correlativity can be utilized when every eight samples is performed the variable length encoding.

For data expressed by the expression (8) above, the array obtained by dividing the regular triangle 10, after the value $d^1$ of the spherical surface wavelet function at level 1, into four groups is expressed by the following expression (10):

$$
\begin{array}{lll}
c^0\_R, & c^0\_G, & c^0\_B, \\
d^0[3]\_R, & d^0[3]\_G, & d^0[3]\_B, \\
d^1_{0-3}[3][4]\_R, & d^1_{0-3}[3][4]\_G, & d^1_{0-3}[3][4]\_B, \\
d^2_{0-3}[3][4][4]\_R, & d^2_{0-3}[3][4][4]\_G, & d^2_{0-3}[3][4][4]\_B, & \cdots (10) \\
d^3_{0-3}[3][4][4][4]\_R, & d^3_{0-3}[3][4][4][4]\_G, & d^3_{0-3}[3][4][4][4]\_B, \\
\quad\vdots & \quad\vdots & \quad\vdots \\
d^{N-1}_{0-3}[3][4][4]\cdots[4]\_R, & d^{N-1}_{0-3}[3][4][4]\cdots[4]\_G, & d^{N-1}_{0-3}[3][4][4]\cdots[4]\_B,
\end{array}
$$

Further, the values d* of the spherical surface wavelet function are arrayed for each spherical surface wavelet function and are converted with the expression (11) below. In other words, largely data is bundled for each of R, G, and B, and is arrayed for each spherical surface wavelet function in the same color.

$$
\begin{array}{l}
\{d^2[\,[0][0], d^2[\,[0][1], d^2[\,[0][2], d^2[\,[0][3], d^2[\,[1][0], d^2[\,[1][1], d^2[\,[1][2], d^2[\,[0][4], \\
d^2[\,[2][0], d^2[\,[2][1], d^2[\,[2][2], d^2[\,[2][3], d^2[\,[3][0], d^2[\,[3][1], d^2[\,[3][2], d^2[\,[3][4]\} \\
\{d^2[\,[0][0], d^2[\,[0][1], d^2[\,[0][2], d^2[\,[0][3], d^2[\,[0][4], d^2[\,[0][5], d^2[\,[0][6], d^2[\,[0][7], \quad \cdots (11) \\
d^2[\,[1][0], d^2[\,[1][1], d^2[\,[1][2], d^2[\,[1][3], d^2[\,[1][4], d^2[\,[1][5], d^2[\,[1][6], d^2[\,[1][7]\}
\end{array}
$$

At level 2 and on, four data samples appear twice in the same data so that eight data samples are arrayed successively for the same color, and therefore correlativity of data is higher. The expression (11) shows the case at level 2. The expression (12) shows the configuration.

$$
\begin{array}{lll}
c^0\_R, & c^0\_G, & c^0\_B, \\
d^0\_R, & d^0\_G, & d^0\_B, \\
d^1_{0-2}[0-3]\_R, & d^1_{0-2}[0-3]\_G, & d^1_{0-2}[0-3]\_B, \\
d^2_{0-2}[2][8]\_R, & d^2_{0-2}[2][8]\_G, & d^2_{0-2}[2][8]\_B, & \cdots (12) \\
d^3_{0-2}[4][4][2][8]\_R, & d^3_{0-2}[4][4][2][8]\_G, & d^3_{0-2}[4][4][2][8]\_B, \\
\quad\vdots & \quad\vdots & \quad\vdots \\
d^{N-1}_{0-2}[4]\cdots[2][8]\_R, & d^{N-1}_{0-2}[4]\cdots[2][8]\_G, & d^{N-1}_{0-2}[4]\cdots[2][8]\_B,
\end{array}
$$

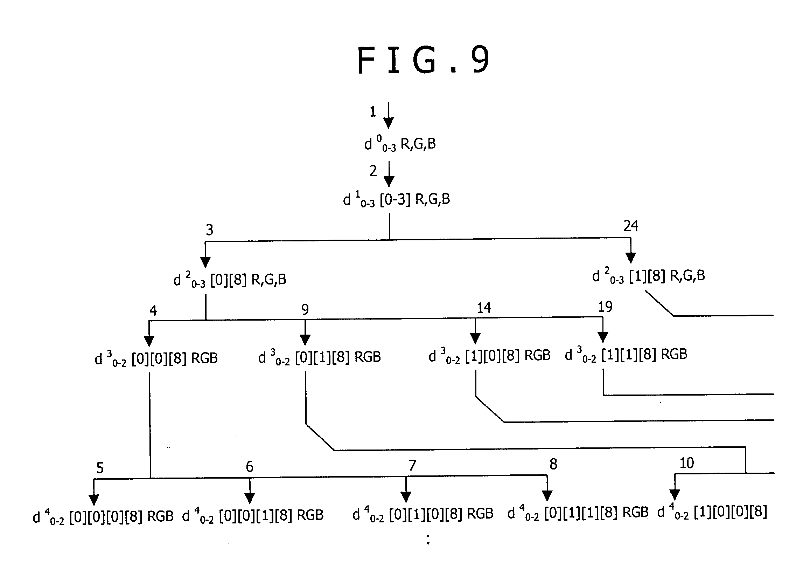

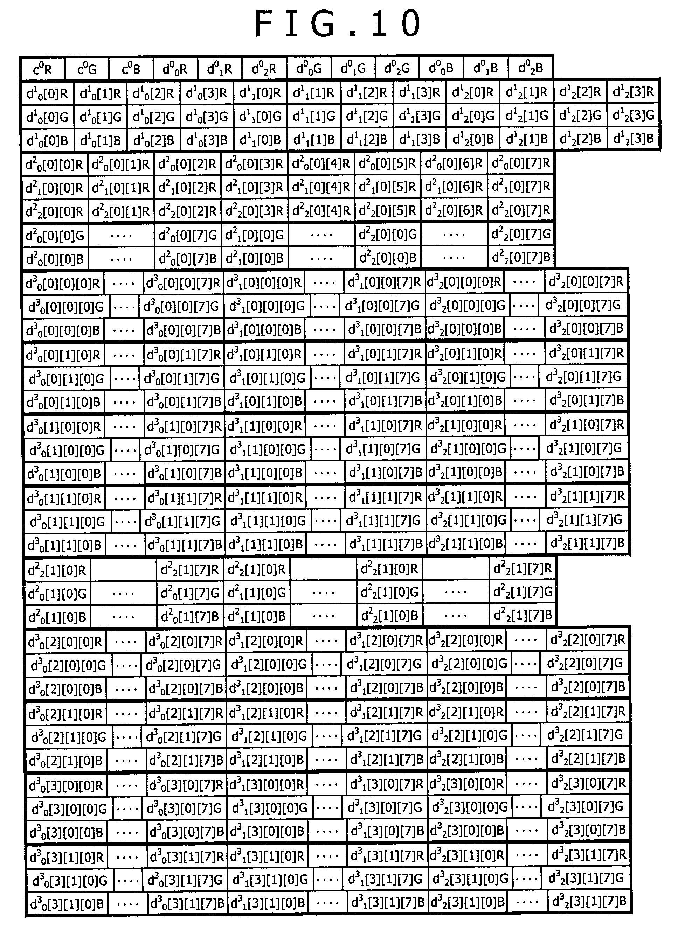

FIG. 9 illustrates an array tree structure showing the array order shown by the expression (12). In the case shown in the figure, the maximum level is 5. Further FIG. 10 shows a specified example of the stream structure shown in FIG. 9 (Note that the maximum level is 4 for simplification) .

By applying the variable length encoding to a stream arrayed as described above, high efficiency encoding can be realized.

Descriptions are provided below for scalability of a stream format according to this embodiment.

By converting the data obtained by subjecting data mapped on a spherical surface to the spherical surface wavelet conversion to a data stream having the structure shown in FIG. 9 and FIG. 10, $c^1$ [20] [4], $c^2$ [20] [16], $c^3$ [20] [64], ··· $c^N$ [20] [$4^N$] can easily be obtained.

In this step, when a minimum level required for reproduction of an image or the like is known and encoding can be performed with sufficient efficiency by resolving the data down to the minimum level, also a stream structure starting from the lowest level can be implemented according to the processing sequence as described below.

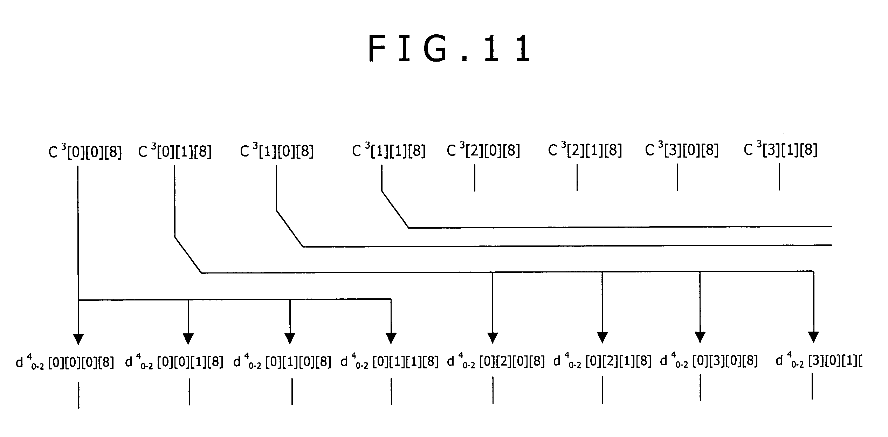

FIG. 11 shows a data array tree structure when the lowest level is, for instance, 3. Although the symbols R, G and B are not shown in the figure for simplification, data is combined to each other for each of the R, G, and B color components as described above. Further the descriptions below assume a case in which a spherical surface is approximated with regular triangles at level 0. With the configuration as described above, samples having high correlativity appear successively, so that a macro block can advantageously be prepared.

The descriptions are described below for partial extraction and partial reconstruction of a data stream having the format according to the present invention.

By converting the data obtained by subjecting data mapped on a spherical surface to the spherical surface wavelet conversion to a data stream having the structure shown in FIG. 10 and FIG. 11, when encoded data is reconstructed on the original spherical surface, partial extraction can be performed by placing values of the spherical surface wavelet function at the next level reconstructed at the same positions as those for the triangles at the level currently reconstructed.

Further different resolutions can be assigned to different portions of an image to be reproduced according to the processing sequence described above. For instance, when a face of a person is to be zoomed up, only the portion of the image may be reconstructed. Further different resolutions may be assigned to different portions of an entire circumference image itself, if there is no visual influence. In this example, values of the spherical surface wavelet functions at higher levels are not required in portions with lower resolution, so that the total volume of the data can be reduced. In this case, a correspondence between a position of data such as an image on the spherical surface and a level value may be added as meta information.

D. High efficiency encoding of acoustic field data

If it is possible to completely control an acoustic pressure on a surface and particle velocities in the normal direction against the surface, an acoustic field in an inner region D in a closed surface S can completely be reproduced based on the Kirchhuff's integral formula. In other words, by mapping data for an acoustic pressure or particle velocities on a spherical surface, an acoustic field reproducible in a wide range can be treated. Here the high efficiency encoding using the spherical surface wavelet is examined.

The resolution algorithm by spherical surface wavelet conversion allows for division of a spatial frequency. By making use of this characteristic, high efficiency encoding can be realized. Further by executing orthogonal conversion along the time axis, a signal can be converted to frequency spectrum information, so that encoding can be performed with higher efficiency. In this embodiment, MDCT (Modified DCT) is used as means for orthogonal conversion in the time axis direction.

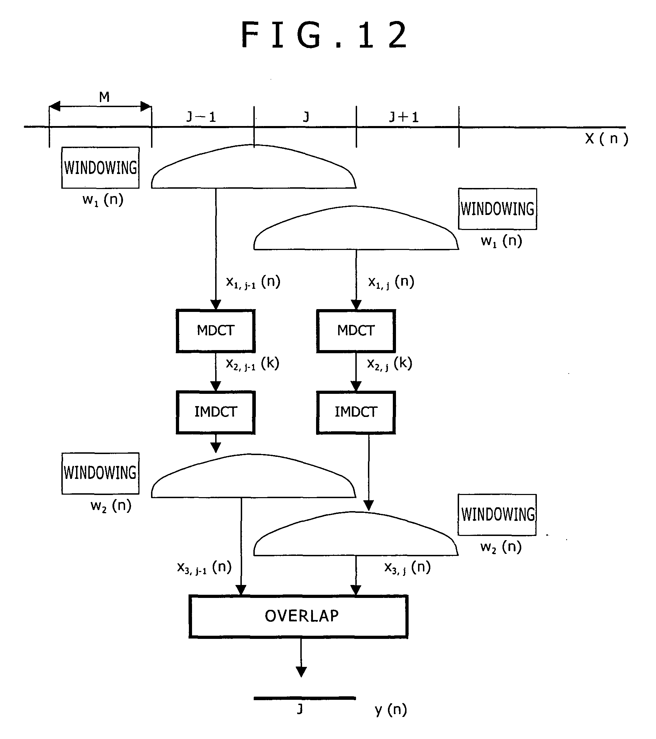

Fig. 12 schematically shows a processing flow in MDCT and IMDCT. The MDCT and IMDCT are carried out according to the processing sequence as described below.

(1) Windowing (for MDCT)

A window $w_1$ (n) ($0 \leqq n < 2M$) for MDCT is set in an input signal x (n).

$$x_{1,j} (n) = w_1 (n)x(n+JM),\ 0 \leq n < 2M \qquad (13)$$

(2) MDCT

The signal $x_{1,j}$ (n) having been subjected to windowing is converted to an MDCT coefficient $X_j$ (k).

$$X_j = \frac{2\left(\sum_{n=0}^{2M-1} x_{1,j}(n)\cos\left(\frac{\pi(2k+1)(2n+M+1)}{4M}\right)\right)}{M} \quad 0 \leq k < M \qquad \cdots(14)$$

In this step, from the sample number 2M of time-line signals are computed M coefficients, the number of which is half of 2M. Windowed sections overlap up to the centers of respective samples, so that the same number of coefficients as the time-line signals are computed.

(3) IMDCT

The MDCT coefficient $X_j$ (k) is subjected to reverse conversion with the following expression (15).

$$X_{2,j} = \sum_{n=0}^{M-1} x_j(k)\cos\left(\frac{\pi(2k+1)(2n+M+1)}{4M}\right) \quad 0 \le n < 2M \qquad \cdots(15)$$

(4) Windowing (for IMDCT)

A window $w_2$ (n) $(0 \le n < 2M)$ for IMDCT is set in an input signal $x_{2,j}$ (n) having been subjected to IMDCT.

$$x_{3,j} = w_2 \ (n)x_{2,j} \ (n) \ 0 \le n < 2M \tag{16}$$

(5) Overlap

A latter half portion of the (j-1)th $X_{3,\,j-1}$ (n) and a former half portion of j-th $X_{3,j}$ (n) are combined with each other to obtain an output time signal y (n + JM).

$$y(n+ JM) = X_{3,j-1} \ (n + M) + x_{3,j} \ (n) \ 0 \le n < M \tag{17}$$

The time window treated in the processing above satisfies the conditions expressed by the following expression (18).

$$W^2(n)+w^2(n+M)=1 \ \ 0 \le n < M \tag{18}$$

In this embodiment, a sine window expressed by the following expression (19) is used.

$$W_{\sin}(n) = \sin\frac{\pi\left(n+\frac{1}{2}\right)}{N} \ 0 \le n < M \qquad \cdots(19)$$

With the operations described above, variable-length encoding making use of correlation near a spheric coordinate system can be realized by converting acoustic pressure distribution on a spherical surface and particle velocities in the normal direction against the surface to a spatial frequency and a frequency in the time axis direction.

As representative techniques for variable-length encoding, there are the Huffman encoding and LZ system, but these techniques are applicable to characters on a text basis. In this specification, the present inventor proposes the variable-length encoding method enabling to substantially reduce resources required on the decoding side, to improve the capability of real time processing, and to treat 8-bit or more signals.

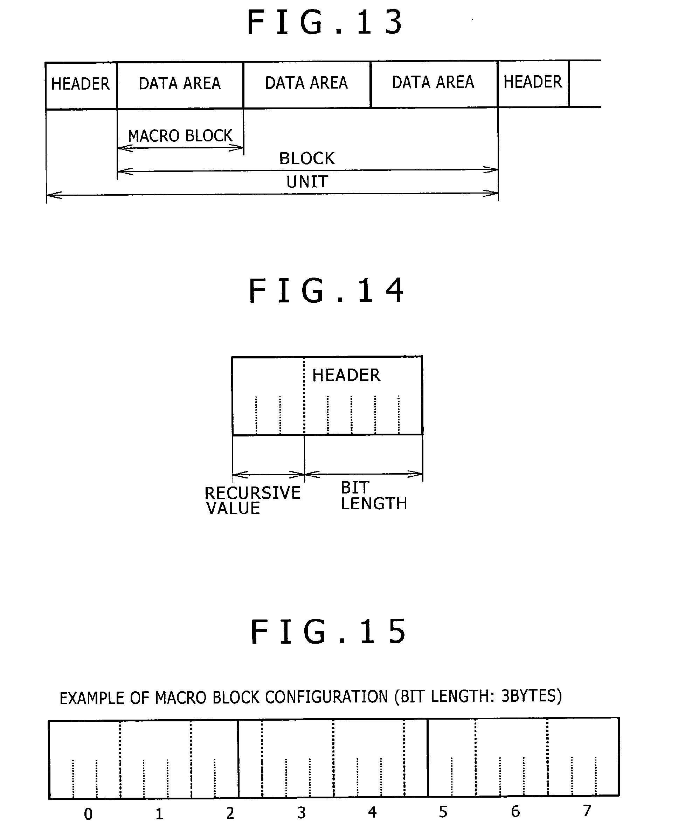

Fig. 13 to Fig. 15 schematically illustrate configuration of a data stream having been subjected to variable-length encoding according to the present invention. As shown in the figures, a 1-byte header including meta information is present at the head, followed by data areas.

Each data area includes a macro block for eight signal samples, and when the following macro blocks have the same bit length, the blocks are directly combined each other without providing a header. The number of macro blocks repeated until the next header appears, and a bit length of the macro block are described at the header (Refer to Fig. 14). The repeated macro blocks and a header are defined herein as a unit.

Fig. 15 illustrates a method of storing data in a macro block. In a macro block, the eight samples are arrayed and stored in the descending order from that having the largest bit length. In the example shown in the figure, the sample having the largest bit length among the eight samples has the bit length of 3 bits. In this case, a byte length of the macro block as a whole is 3 bytes.

With the operations as described above, byte alignment between a header and a macro block is ensured, and the stored data can easily be treated by hardware and software.

In the example shown in Fig. 14, the header has 8-bit length, and a recursive value of macro blocks is stored in the former 3 bits. Therefore, even if eight or more macro blocks having the same bit length appear successively, the maximum number of macro blocks accommodated within one block is eight. Bit length data of macro blocks accommodated in the block is stored in the latter 5 bits of the header.

By subjecting the values resolved by the spherical surface wavelet to the variable-length encoding as described above, a stream format having the following functions can be realized.

(1) High efficiency encoding
(2) Scalability of resolution
(3) Partial extraction of surface information

In the spherical surface wavelet, a spherical surface is approximated (projected) with a regular polyhedron configured with a plurality of regular triangles , and each regular triangle constituting a surface of this regular polyhedron is recursively quartered (as described above).

Fig. 6 shows an example of an ID allocation format to triangles (functional values) resolved from a spherical surface. On the left side of the figure, IDs of regular triangles constituting the icosahedron projected to a sphere at level 0 are shown. On the right side of the figure, a principle of allocating IDs when each regular triangle is further resolved is shown.

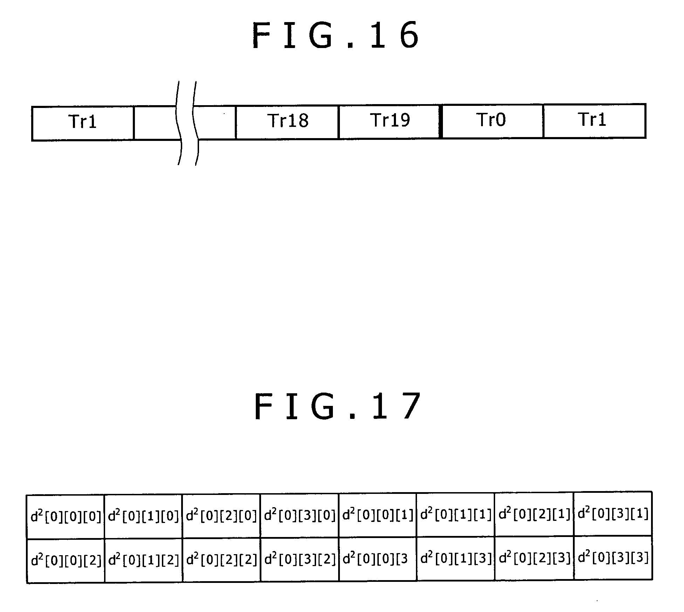

When data mapped on a spherical surface such as data for reproduction of an acoustic field is subjected to the spherical surface wavelet conversion, scaling coefficients and values of wavelet functions are arrayed for each level in the output data. In this embodiment, to obtain scalability of partial resolution or convenience of partial distribution, the coefficients $c_k^{(j)}$ of the scaling functions $\Phi_k^{(j)}$ and the value $d_{k,m}^{(j)}$ of the wavelet function $\Psi_k^{(j)}$ arrayed for each level are rearranged to an array reflecting positional relations on the spherical surface to construct a data stream. For this purpose, the value $d_{k,m}^{(j)}$ of the wavelet function $\Psi_k^{(j)}$ at each level obtained by the spherical surface wavelet conversion are divided into those for regular triangles Tr1, Tr2, ⋯ constituting a spherical surface at level 0 shown in Fig. 6. Then at level J+1, values of the spherical surface wavelet functions divided into those for regular triangles Tr1, Tr2, ⋯ are affixed to the ends of values of the spherical surface wavelet functions for the corresponding regular triangles (Refer to Fig. 16).

For instance, when data mapped on a spherical surface is surface information for completely reproducing an acoustic field, information included in each of the regular triangles Tr1, Tr2, ⋯ are code obtained by subjecting an acoustic pressure on the spherical surface and particle velocities in the normal direction to the spherical surface wavelet conversion. Namely, the information is scaling coefficients at level 0 resolved by the spherical surface wavelet conversion, values of spherical surface wavelet functions at each level (Note that N indicates the maximum level number).

$$c^0$$

$$d^0{}_0, d^0{}_1, d^0{}_2$$

$$d^1{}_{0\_k}, d^1{}_{1\_k}, d^1{}_{2\_k} \qquad (k=0,1,2,3)$$

.

.

.

$$d^{N-1}{}_{0\_k}, d^{N-1}{}_{1\_k}, d^{N-1}{}_{2\_k} \qquad (k=0,1,2,3,...,4^N-1)$$

and a spectrum of the M samples having been subjected to MDCT conversion for each data as described above, and such codes successively appear.

Next descriptions are provided for a format of a data stream for each regular triangle Tr.

The following expression (20) indicates an array of information to be stored when the maximum level number is N.

- Acoustic pressure -

$$c^0[0,1,...,M\text{-}1]$$

$$d^0[3][0,1,...,M\text{-}1]$$

$$d^1[3]4[0,1,\cdots,M\text{-}1]$$

$$d^2[3][16][0,1,\cdots,M\text{-}1]$$

$$d^3[3]64[0,1,\cdots,M\text{-}1]$$

$$.$$
$$.$$
$$.$$

$$d^{N\text{-}1}[3][4^N][0,1,\cdots, M\text{-}1] \tag{20}$$

- Particle velocities in the normal direction -

$$c^0[0,1,\cdots,M\text{-}1]$$

$$d^0[3][0,1,...,M\text{-}1]$$

$$d^1[3][4][0,1,...,M\text{-}1]$$

$$d^2[3][16][0,1,\cdots,M\text{-}1]$$

$$d^3[3][64][0,1,\cdots,M\text{-}1]$$

$$.$$
$$.$$
$$.$$

$$d^{N\text{-}1}[3][4^N][0,1,\cdots,M\text{-}1]$$

In the expression above, the [0,1,···, M-1] indicates a spectrum after MDCT conversion. d*[3] corresponds to three types of spherical surface wavelet functions. The array positioned at the center after $d^1$ indicates an ID of a divided triangle.

In this step, four triangles divided at a time are sequentially interleaved according to the ID order between spectrums. Fig. 17 shows an example in which four triangles divided at a time are sequentially interleaved according to the ID order between spectrums for d². The interleaving operation is performed in the same spherical surface wavelet function.

With the operations as described above, when every eight data samples are subjected to variable-length encoding, two types of correlativity between a spatial frequency and a time frequency. An array obtained by interleaving the data expressed by the expression (20) at d¹ and on and packing every four IDs together is expressed by the expression (21). In the expression P indicates an acoustic pressure and V indicates a particle velocity in the normal direction.

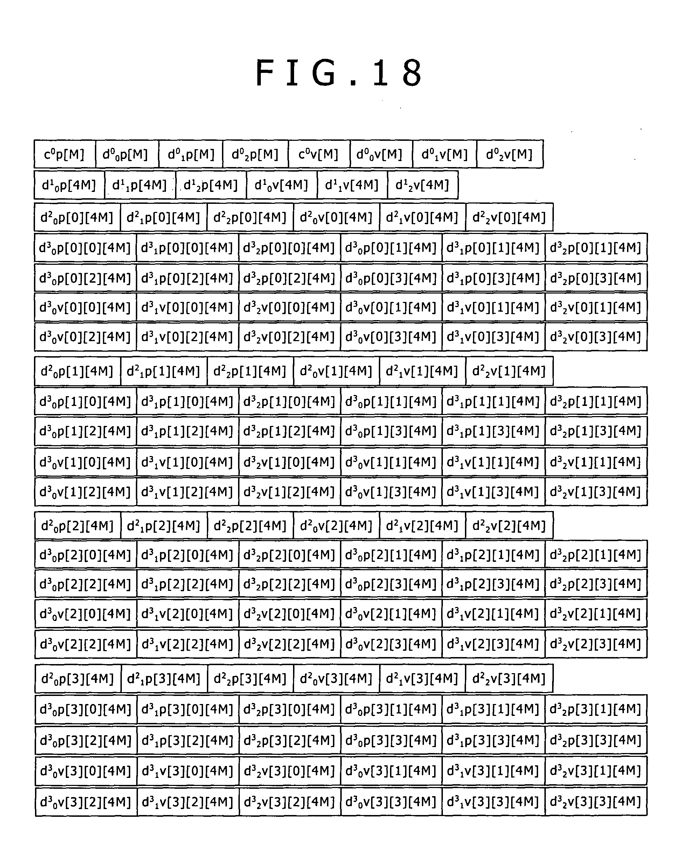

$$
\begin{array}{ll}
c^0 P[0,1,\cdots,M-1], & c^0 V[0,1,\cdots,M-1], \\
d^0 P[3][0,1,\cdots,M-1], & d^0 V[3][0,1,\cdots,M-1], \\
d^1 P[3][0,1,\cdots,4M-1], & d^1 V[3][0,1,\cdots,4M-1], \\
d^2 P[3][4][0,1,\cdots,4M-1], & d^2 V[3][4][0,1,\cdots,4M-1], \quad \cdots(21) \\
d^3 P[3][4][4][0,1,\cdots,4M-1], & d^3 V[3][4][4][0,1,\cdots,4M-1], \\
\qquad\qquad \vdots & \qquad\qquad \vdots \\
d^{N-1} P[3][4]\cdots[4][0,1,\cdots,4M-1], & d^{N-1} V[3][4]\cdots[4][0,1,\cdots,4M-1],
\end{array}
$$

d* are successively arrayed for each spherical surface wavelet function and also according to acoustic pressures and particle velocities in the normal direction and are converted to the expression (22), and are used as a data array stream as shown in Fig. 18.

$$
\begin{array}{l}
c^0 [P,V][0,1,\cdots,M-1], \\
d_0^0 [P,V][0,1,\cdots,M-1], \\
d_0^1 [P,V][0,1,\cdots,4M-1], \\
d_0^2 [P,V][4][0,1,\cdots,4M-1], \\
d_0^3 [P,V][4][4][0,1,\cdots,4M-1], \qquad \cdots(22) \\
\qquad\quad \vdots \\
d_0^{N-1} [\overline{P},V][4]\cdots[4][0,1,\cdots,4M-1],
\end{array}
$$

$$
\begin{array}{ll}
d_1^0 [P,V][0,1,\cdots,M-1], & d_2^0 [P,V][0,1,\cdots,M-1], \\
d_1^1 [P,V][0,1,\cdots,4M-1], & d_2^1 [P,V][0,1,\cdots,4M-1], \\
d_1^2 [P,V][4][0,1,\cdots,4M-1], & d_2^2 [P,V][4][0,1,\cdots,4M-1], \\
d_1^3 [P,V][4][4][0,1,\cdots,4M-1], & d_2^3 [P,V][4][4][0,1,\cdots,4M-1], \\
\qquad\quad \vdots & \qquad\quad \vdots \\
d_1^{N-1} [P,V][4]\cdots[4][0,1,\cdots,4M-1], & d_2^{N-1} [P,V][4]\cdots[4][0,1,\cdots,4M-1],
\end{array}
$$

Fig. 18 shows a specific image of a stream structure indicating an array order in the expression (21) above. In the example shown in the figure, the maximum level number is 4. Further only one regular triangle at level 0 is described, and 20 data samples succeed.

In the expression above, [M] indicates a spectrum after MDCT conversion, while [4M] indicates a data array after the spectrum subjected to MDCT conversion is interleaved as shown in Fig. 17.

Additional Comments

The present invention was described above with reference to particular embodiments thereof. It is obvious that modification of or alternatives for the embodiments can be made by those skilled in the art without departing from the gist of the present invention. Namely the descriptions of the present invention above are provided for exemplification and should not be understood with narrow interpretation. To determine the gist of the present invention, the claims appended thereto should be referred to.

Industrial Applicability

The present invention provides an excellent data encoder and a data encoding method allowing for advantageously encoding data mapped on a spherical surface, and a computer program for the same.

Further the present invention provides an excellent data encoder and a data encoding method allowing for advantageously encoding data mapped on a spherical surface by describing the same with a prespecified mathematical model, and a computer program for the same.

Still further the present invention provides an excellent data encoder and a data encoding method allowing for advantageously encoding data mapped on a spherical surface with a format enabling partial resolution and partial distribution, and a computer program for the same.

The data encoder according to the present invention prepares a data stream by rearranging coefficients $ck^{(j)}$ of the scaling functions $\Phi_k^{(j)}$ arrayed for each level and the value $d_{k,m}^{(j)}$ of the wavelet function $\Psi_k^{(j)}$ as an array following the positional relations on a spherical surface.

Therefore, with the data encoding according to the present invention, when a lowest level required for data reproduction is known and data encoding can be performed with sufficiently high efficient code by resolving down to the level, also a stream structure starting from the lowest level can be implemented with the same concept, which enables realization of scalability.

Further with the data encoding according to the present invention, when encoded data is reconstructed on the original spherical surface, partial extraction can be made by placing a value of the spherical surface wavelet function at the next level at the same position as that of a triangle currently being reconstructed.

Further with the data encoding according to the present invention, different levels of resolution may be assigned to different portions of an image to be reproduced. For instance, when a face of a person is to be zoomed up, only the portion may be reconstructed. Further if there is no visual influence, different levels of resolution may be assigned to different portions of an entire circumference image. In this case, values of spherical surface wavelet functions at higher levels are not required for a portion at lower level, so that a total volume of data can be reduced.

**Claims**

1. A data encoder for encoding data mapped on a spherical surface comprising:

    data conversion means for subjecting data mapped on a spherical surface to the spherical surface wavelet conversion to sequentially generate, for a spherical surface at level 0 at which the spherical surface is approximated to a regular polygon and a spherical surface at level j where triangles each constituting a surface of a polyhedron approximating the spherical surface at level 0 (j: an integral number of 1 or more) is regressively quartered, a coefficient $c_k^{(j)}$ in the scaling function $\Phi_k^{(j)}$ and a value $d_{k,m}^{(j)}$ of the wavelet function $\Psi_k^{(j)}$ (wherein k indicates a coordinate value on a spherical surface, m=1, 2, 3); and

    data stream preparing means for rearranging the coefficient $c_k^{(j)}$ in the scaling function $\Phi_k^{(j)}$ and the value $d_{k,m}^{(j)}$ of the wavelet function $\Psi_k^{(j)}$ according to positional relations on the spherical surface.

2. The data encoder according to claim 1 further comprising means for encoding the rearranged data stream.

3. The data encoder according to claim 1, wherein data values mapped on triangles each constituting a surface of a polygon approximating a spherical surface at level 0 and values of the spherical surface wavelet functions at each level are outputted from said data converting means.

**4.** The data encoder according to claim 3, wherein said data stream preparing means rearranges values of the spherical surface wavelet functions at up to level j into a data stream according to coordinates on a spherical surface, divides the data values based on coordinates on the spherical surface to provide places for insertion, and further divides values of the spherical surface wavelet function at level j+1 based on coordinates on the spherical surface to combine the values to the corresponding places for insertions.

**5.** The data encoder according to claim 1, wherein:

said data converting means subjects image information with image data including color and brightness mapped on a spherical surface to the spherical surface wavelet conversion to obtain values of the scaling function at level 0 and values of spherical surface wavelet functions at each level; and
said data stream preparing means divides values of the spherical surface wavelet functions at various levels based on coordinates on the spherical surface and according to regular triangles each approximating the spherical surface at level 0, separates the values of the scaling function at level 0 for each divided regular triangle and values of the spherical surface wavelet functions at each level for each color component, arrays the separated values according to regular triangles approximating a spherical surface at a prespecified level, combines the values according to order of colors, and arrays the data for each spherical surface wavelet function.

**6.** The data encoder according to claim 5, wherein said data stream preparing means arrays a prespecified number of data samples for the same color in the state where four data samples for the same color appear twice at level 2 and on.

**7.** The data encoder according to claim 1, wherein:

said data converting means subjects data including acoustic pressure data and data concerning particle velocities in the normal direction against a surface, and for reproducing an acoustic field in a given inner region on a spherical surface to the spherical surface wavelet conversion; and
said data stream preparing means subjects each data resolved by the spherical surface wavelet conversion to MDCT conversion to obtain a spectrum of the M sample, arrays the data according to regular triangles approximating a spherical surface at a specified level, interleaves the data between spectrums, and further arrays the interleaved data for each spherical surface wavelet function.

**8.** The data encoder according to claim 7, wherein said data stream preparing means arrays values of the spherical surface wavelet function for each spherical surface wavelet function, and then arrays the data according to the order of acoustic pressures and particle velocities in the normal direction.

**9.** The data encoder according to claim 2, wherein said data stream encoding means subjects a prespecified number of data samples as a macro block to variable-length encoding and directly combines successive macro blocks each having the same bit length without a header.

**10.** The data encoder according to claim 9, wherein data samples are arrayed in the descending order from that having the largest bit length and sequentially linked to each other.

**11.** The data encoder according to claim 9, wherein a recursive value for a macro block and bit length of the macro block are stored in the header.

**12.** The data encoder according to claim 9, wherein a scale factor is applied to a macro block and scale factor information is stored in the header.

**13.** A data encoding method for encoding data mapped on a spherical surface comprising the steps of:
subjecting data mapped on a spherical surface to the spherical surface wavelet conversion to sequentially generate, for a spherical surface at level 0 at which the spherical surface is approximated to a regular polygon and a spherical surface at level j where triangles each constituting a surface of a polyhedron approximating the spherical surface at level 0 (j: an integral number of 1 or more) is regressively quartered, a coefficient $c_k^{(j)}$ in the scaling function $\Phi_k^{(j)}$ and a value $d_{k,m}^{(j)}$ of the wavelet function $\Psi_k^{(j)}$ (wherein k indicates a coordinate value on a spherical surface, m=1, 2, 3); and
rearranging the coefficient $c_k^{(j)}$ in the scaling function $\Phi_k^{(j)}$ and the value $d_{k,m}^{(j)}$ of the wavelet function $\Psi_k^{(j)}$

according to positional relations on the spherical surface.

14. The data encoding method according to claim 13 further comprising the step of encoding a rearranged data stream.

15. The data encoding method according to claim 13, wherein data values mapped on triangles each constituting a surface of a regular polygon approximating a spherical surface at level 0 and values of the spherical surface wavelet functions at each level are outputted from said data converting step.

16. The data encoding method according to claim 15,
wherein said data stream preparing step rearranges values of the spherical surface wavelet functions at up to level j into a data stream according to coordinates on a spherical surface, divides the data values based on coordinates on the spherical surface to provide places for insertion, and further divides values of the spherical surface wavelet function at level j+1 based on coordinates on the spherical surface to combine the values to the corresponding places for insertions.

17. The data encoding method according to claim 13, wherein:

said data converting step subjects image information with image data including color and brightness mapped on a spherical surface to the spherical surface wavelet conversion to obtain values of the scaling function at level 0 and values of spherical surface wavelet functions at each level; and
said data stream preparing step divides values of the spherical surface wavelet functions at various levels based on coordinates on the spherical surface and according to regular triangles each approximating the spherical surface at level 0, separates the values of the scaling function at level 0 for each divided regular triangle and values of the spherical surface wavelet functions at each level for each color component, arrays the separated values according to regular triangles approximating a spherical surface at a prespecified level, combines the values according to order of colors, and arrays the data for each spherical surface wavelet function.

18. The data encoding method according to claim 17, wherein said data stream preparing step arrays a prespecified number of data samples for the same color in the state where four data samples for the same color appear twice at level 2 and on.

19. The data encoding method according to claim 13, wherein:

said data converting step subjects data including acoustic pressure data and data concerning particle velocities in the normal direction against a surface, and for reproducing an acoustic field in a given inner region on a spherical surface to the spherical surface wavelet conversion; and
said data stream preparing step subjects each data resolved by the spherical surface wavelet conversion to MDCT conversion to obtain a spectrum of the M sample, arrays the data according to regular triangles approximating a spherical surface at a specified level, interleaves the data between spectrums, and further arrays the interleaved data for each spherical surface wavelet function.

20. The data encoding method according to claim 19, wherein said data stream preparing step arrays values of the spherical surface wavelet function for each spherical surface wavelet function, and then arrays the data according to the order of acoustic pressures and particle velocities in the normal direction.

21. A computer program described in the computer-readable state so that processing for encoding data mapped on a spherical surface can be executed on a computer system, said computer program comprising the steps of:
subjecting data mapped on a spherical surface to the spherical surface wavelet conversion to sequentially generate, for a spherical surface at level 0 at which the spherical surface is approximated to a regular polygon and a spherical surface at level j where triangles each constituting a surface of a polyhedron approximating the spherical surface at level 0 (j: an integral number of 1 or more) are regressively quartered, a coefficient $c_k^{(j)}$ in the scaling function $\Phi_k^{(j)}$ and a value $d_{k,m}^{(j)}$ of the wavelet function $\Psi_k^{(j)}$ (wherein k indicates a coordinate value on a spherical surface, m=1, 2, 3); and
rearranging the coefficient $c_k^{(j)}$ in the scaling function $\Phi_k^{(j)}$ arranged for each level and the value $d_{k,m}^{(j)}$ of the wavelet function $\Psi_k^{(j)}$ according to positional relations on the spherical surface.

# FIG.1

level j=0　　　j=1　　　j=2

# FIG.2

$\phi_k^{(j)}$

$\psi_{k,1}^{(j)}$　　$\psi_{k,2}^{(j)}$　　$\psi_{k,3}^{(j)}$

# F I G . 3

| HEADER | DATA AREA | DATA AREA | DATA AREA | HEADER | |
|---|---|---|---|---|---|

MACRO BLOCK

BLOCK

UNIT

# F I G . 4

HEADER

RECURSIVE
VALUE

BIT
LENGTH

# F I G . 5

EXAMPLE OF MACRO BLOCK CONFIGURATION (BIT LENGTH: 3BYTES)

| 0 | 1 | 2 | 3 | 4 | 5 | 6 | 7 |

# FIG.6

Tr₀

# FIG.7

| Tr0 | Tr1 | | | Tr18 | Tr19 | Tr0 | Tr1 |

FIG. 8

LEVEL j

LEVEL j + 1

LEVEL j + 2

# FIG.9

$1 \downarrow$

$d\ ^0_{0\text{-}3}$ R,G,B

$2 \downarrow$

$d\ ^1_{0\text{-}3}$ [0-3] R,G,B

3                  24

$d\ ^2_{0\text{-}3}$ [0][8] R,G,B          $d\ ^2_{0\text{-}3}$ [1][8] R,G,B

4     9     14     19

$d\ ^3_{0\text{-}2}$ [0][0][8] RGB $d\ ^3_{0\text{-}2}$ [0][1][8] RGB $d\ ^3_{0\text{-}2}$ [1][0][8] RGB $d\ ^3_{0\text{-}2}$ [1][1][8] RGB

5    6    7    8    10

$d\ ^4_{0\text{-}2}$ [0][0][0][8] RGB $d\ ^4_{0\text{-}2}$ [0][0][1][8] RGB  $d\ ^4_{0\text{-}2}$ [0][1][0][8] RGB $d\ ^4_{0\text{-}2}$ [0][1][1][8] RGB $d\ ^4_{0\text{-}2}$ [1][0][0][8]

:

EP 1 603 342 A1

# FIG.10

| $c^0R$ | $c^0G$ | $c^0B$ | $d^0_0R$ | $d^0_1R$ | $d^0_2R$ | $d^0_0G$ | $d^0_1G$ | $d^0_2G$ | $d^0_0B$ | $d^0_1B$ | $d^0_2B$ | |
|---|---|---|---|---|---|---|---|---|---|---|---|---|
| $d^1_0[0]R$ | $d^1_0[1]R$ | $d^1_0[2]R$ | $d^1_0[3]R$ | $d^1_1[0]R$ | $d^1_1[1]R$ | $d^1_1[2]R$ | $d^1_1[3]R$ | $d^1_2[0]R$ | $d^1_2[1]R$ | $d^1_2[2]R$ | $d^1_2[3]R$ | |
| $d^1_0[0]G$ | $d^1_0[1]G$ | $d^1_0[2]G$ | $d^1_0[3]G$ | $d^1_1[0]G$ | $d^1_1[1]G$ | $d^1_1[2]G$ | $d^1_1[3]G$ | $d^1_2[0]G$ | $d^1_2[1]G$ | $d^1_2[2]G$ | $d^1_2[3]G$ | |
| $d^1_0[0]B$ | $d^1_0[1]B$ | $d^1_0[2]B$ | $d^1_0[3]B$ | $d^1_1[0]B$ | $d^1_1[1]B$ | $d^1_1[2]B$ | $d^1_1[3]B$ | $d^1_2[0]B$ | $d^1_2[1]B$ | $d^1_2[2]B$ | $d^1_2[3]B$ | |

| | | | | | | | |
|---|---|---|---|---|---|---|---|
| $d^2_0[0][0]R$ | $d^2_0[0][1]R$ | $d^2_0[0][2]R$ | $d^2_0[0][3]R$ | $d^2_0[0][4]R$ | $d^2_0[0][5]R$ | $d^2_0[0][6]R$ | $d^2_0[0][7]R$ |
| $d^2_1[0][0]R$ | $d^2_1[0][1]R$ | $d^2_1[0][2]R$ | $d^2_1[0][3]R$ | $d^2_1[0][4]R$ | $d^2_1[0][5]R$ | $d^2_1[0][6]R$ | $d^2_1[0][7]R$ |
| $d^2_2[0][0]R$ | $d^2_2[0][1]R$ | $d^2_2[0][2]R$ | $d^2_2[0][3]R$ | $d^2_2[0][4]R$ | $d^2_2[0][5]R$ | $d^2_2[0][6]R$ | $d^2_2[0][7]R$ |
| $d^2_0[0][0]G$ | .... | $d^2_0[0][7]G$ | $d^2_1[0][0]G$ | .... | $d^2_2[0][0]G$ | .... | $d^2_2[0][7]G$ |
| $d^2_0[0][0]B$ | .... | $d^2_0[0][7]B$ | $d^2_1[0][0]B$ | .... | $d^2_2[0][0]B$ | .... | $d^2_2[0][7]B$ |

| | | | | | | | | |
|---|---|---|---|---|---|---|---|---|
| $d^3_0[0][0][0]R$ | .... | $d^3_0[0][0][7]R$ | $d^3_1[0][0][0]R$ | .... | $d^3_1[0][0][7]R$ | $d^3_2[0][0][0]R$ | .... | $d^3_2[0][0][7]R$ |
| $d^3_0[0][0][0]G$ | .... | $d^3_0[0][0][7]G$ | $d^3_1[0][0][0]G$ | .... | $d^3_1[0][0][7]G$ | $d^3_2[0][0][0]G$ | .... | $d^3_2[0][0][7]G$ |
| $d^3_0[0][0][0]B$ | .... | $d^3_0[0][0][7]B$ | $d^3_1[0][0][0]B$ | .... | $d^3_1[0][0][7]B$ | $d^3_2[0][0][0]B$ | .... | $d^3_2[0][0][7]B$ |
| $d^3_0[0][1][0]R$ | .... | $d^3_0[0][1][7]R$ | $d^3_1[0][1][0]R$ | .... | $d^3_1[0][1][7]R$ | $d^3_2[0][1][0]R$ | .... | $d^3_2[0][1][7]R$ |
| $d^3_0[0][1][0]G$ | .... | $d^3_0[0][1][7]G$ | $d^3_1[0][1][0]G$ | .... | $d^3_1[0][1][7]G$ | $d^3_2[0][1][0]G$ | .... | $d^3_2[0][1][7]G$ |
| $d^3_0[0][1][0]B$ | .... | $d^3_0[0][1][7]B$ | $d^3_1[0][1][0]B$ | .... | $d^3_1[0][1][7]B$ | $d^3_2[0][1][0]B$ | .... | $d^3_2[0][1][7]B$ |
| $d^3_0[1][0][0]R$ | .... | $d^3_0[1][0][7]R$ | $d^3_1[1][0][0]R$ | .... | $d^3_1[1][0][7]R$ | $d^3_2[1][0][0]R$ | .... | $d^3_2[1][0][7]R$ |
| $d^3_0[1][0][0]G$ | .... | $d^3_0[1][0][7]G$ | $d^3_1[1][0][0]G$ | .... | $d^3_1[1][0][7]G$ | $d^3_2[1][0][0]G$ | .... | $d^3_2[1][0][7]G$ |
| $d^3_0[1][0][0]B$ | .... | $d^3_0[1][0][7]B$ | $d^3_1[1][0][0]B$ | .... | $d^3_1[1][0][7]B$ | $d^3_2[1][0][0]B$ | .... | $d^3_2[1][0][7]B$ |
| $d^3_0[1][1][0]R$ | .... | $d^3_0[1][1][7]R$ | $d^3_1[1][1][0]R$ | .... | $d^3_1[1][1][7]R$ | $d^3_2[1][1][0]R$ | .... | $d^3_2[1][1][7]R$ |
| $d^3_0[1][1][0]G$ | .... | $d^3_0[1][1][7]G$ | $d^3_1[1][1][0]G$ | .... | $d^3_1[1][1][7]G$ | $d^3_2[1][1][0]G$ | .... | $d^3_2[1][1][7]G$ |
| $d^3_0[1][1][0]B$ | .... | $d^3_0[1][1][7]B$ | $d^3_1[1][1][0]B$ | .... | $d^3_1[1][1][7]B$ | $d^3_2[1][1][0]B$ | .... | $d^3_2[1][1][7]B$ |

| | | | | | | | |
|---|---|---|---|---|---|---|---|
| $d^2_0[1][0]R$ | | $d^2_0[1][7]R$ | $d^2_1[1][0]R$ | | $d^2_2[1][0]R$ | | $d^2_2[1][7]R$ |
| $d^2_0[1][0]G$ | .... | $d^2_0[1][7]G$ | $d^2_1[1][0]G$ | .... | $d^2_2[1][0]G$ | .... | $d^2_2[1][7]G$ |
| $d^2_0[1][0]B$ | .... | $d^2_0[1][7]B$ | $d^2_1[1][0]B$ | .... | $d^2_2[1][0]B$ | .... | $d^2_2[1][7]B$ |

| | | | | | | | | |
|---|---|---|---|---|---|---|---|---|
| $d^3_0[2][0][0]R$ | .... | $d^3_0[2][0][7]R$ | $d^3_1[2][0][0]R$ | .... | $d^3_1[2][0][7]R$ | $d^3_2[2][0][0]R$ | .... | $d^3_2[2][0][7]R$ |
| $d^3_0[2][0][0]G$ | .... | $d^3_0[2][0][7]G$ | $d^3_1[2][0][0]G$ | .... | $d^3_1[2][0][7]G$ | $d^3_2[2][0][0]G$ | .... | $d^3_2[2][0][7]G$ |
| $d^3_0[2][0][0]B$ | .... | $d^3_0[2][0][7]B$ | $d^3_1[2][0][0]B$ | .... | $d^3_1[2][0][7]B$ | $d^3_2[2][0][0]B$ | .... | $d^3_2[2][0][7]B$ |
| $d^3_0[2][1][0]R$ | .... | $d^3_0[2][1][7]R$ | $d^3_1[2][1][0]R$ | .... | $d^3_1[2][1][7]R$ | $d^3_2[2][1][0]R$ | .... | $d^3_2[2][1][7]R$ |
| $d^3_0[2][1][0]G$ | .... | $d^3_0[2][1][7]G$ | $d^3_1[2][1][0]G$ | .... | $d^3_1[2][1][7]G$ | $d^3_2[2][1][0]G$ | .... | $d^3_2[2][1][7]G$ |
| $d^3_0[2][1][0]B$ | .... | $d^3_0[2][1][7]B$ | $d^3_1[2][1][0]B$ | .... | $d^3_1[2][1][7]B$ | $d^3_2[2][1][0]B$ | .... | $d^3_2[2][1][7]B$ |
| $d^3_0[3][0][0]R$ | .... | $d^3_0[3][0][7]R$ | $d^3_1[3][0][0]R$ | .... | $d^3_1[3][0][7]R$ | $d^3_2[3][0][0]R$ | .... | $d^3_2[3][0][7]R$ |
| $d^3_0[3][0][0]G$ | .... | $d^3_0[3][0][7]G$ | $d^3_1[3][0][0]G$ | .... | $d^3_1[3][0][7]G$ | $d^3_2[3][0][0]G$ | .... | $d^3_2[3][0][7]G$ |
| $d^3_0[3][0][0]B$ | .... | $d^3_0[3][0][7]B$ | $d^3_1[3][0][0]B$ | .... | $d^3_1[3][0][7]B$ | $d^3_2[3][0][0]B$ | .... | $d^3_2[3][0][7]B$ |
| $d^3_0[3][1][0]R$ | .... | $d^3_0[3][1][7]R$ | $d^3_1[3][1][0]R$ | .... | $d^3_1[3][1][7]R$ | $d^3_2[3][1][0]R$ | .... | $d^3_2[3][1][7]R$ |
| $d^3_0[3][1][0]G$ | .... | $d^3_0[3][1][7]G$ | $d^3_1[3][1][0]G$ | .... | $d^3_1[3][1][7]G$ | $d^3_2[3][1][0]G$ | .... | $d^3_2[3][1][7]G$ |
| $d^3_0[3][1][0]B$ | .... | $d^3_0[3][1][7]B$ | $d^3_1[3][1][0]B$ | .... | $d^3_1[3][1][7]B$ | $d^3_2[3][1][0]B$ | .... | $d^3_2[3][1][7]B$ |

# F I G . 1 1

$c^3[0][0][8]$  $c^3[0][1][8]$  $c^3[1][0][8]$  $c^3[1][1][8]$  $c^3[2][0][8]$  $c^3[2][1][8]$  $c^3[3][0][8]$  $c^3[3][1][8]$

$d^4_{0-2}[0][0][0][8]$  $d^4_{0-2}[0][0][1][8]$  $d^4_{0-2}[0][1][0][8]$  $d^4_{0-2}[0][1][1][8]$  $d^4_{0-2}[0][2][0][8]$  $d^4_{0-2}[0][2][1][8]$  $d^4_{0-2}[0][3][0][8]$  $d^4_{0-2}[3][0][1][8]$

# FIG.12

# FIG.13

| HEADER | DATA AREA | DATA AREA | DATA AREA | HEADER | |
|--------|-----------|-----------|-----------|--------|---|

MACRO BLOCK

BLOCK

UNIT

# FIG.14

| | HEADER |
|---|---|

RECURSIVE VALUE

BIT LENGTH

# FIG.15

EXAMPLE OF MACRO BLOCK CONFIGURATION (BIT LENGTH: 3BYTES)

| 0 | 1 | 2 | 3 | 4 | 5 | 6 | 7 |
|---|---|---|---|---|---|---|---|

28

# FIG.16

| Tr1 | | | Tr18 | Tr19 | Tr0 | Tr1 |
|---|---|---|---|---|---|---|

# FIG.17

| $d^2$[0][0][0] | $d^2$[0][1][0] | $d^2$[0][2][0] | $d^2$[0][3][0] | $d^2$[0][0][1] | $d^2$[0][1][1] | $d^2$[0][2][1] | $d^2$[0][3][1] |
|---|---|---|---|---|---|---|---|
| $d^2$[0][0][2] | $d^2$[0][1][2] | $d^2$[0][2][2] | $d^2$[0][3][2] | $d^2$[0][0][3 | $d^2$[0][1][3] | $d^2$[0][2][3] | $d^2$[0][3][3] |

# FIG.18

| $c^0p[M]$ | $d^0{}_0p[M]$ | $d^0{}_1p[M]$ | $d^0{}_2p[M]$ | $c^0v[M]$ | $d^0{}_0v[M]$ | $d^0{}_1v[M]$ | $d^0{}_2v[M]$ |
|---|---|---|---|---|---|---|---|

| $d^1{}_0p[4M]$ | $d^1{}_1p[4M]$ | $d^1{}_2p[4M]$ | $d^1{}_0v[4M]$ | $d^1{}_1v[4M]$ | $d^1{}_2v[4M]$ |
|---|---|---|---|---|---|

| $d^2{}_0p[0][4M]$ | $d^2{}_1p[0][4M]$ | $d^2{}_2p[0][4M]$ | $d^2{}_0v[0][4M]$ | $d^2{}_1v[0][4M]$ | $d^2{}_2v[0][4M]$ |
|---|---|---|---|---|---|

| $d^3{}_0p[0][0][4M]$ | $d^3{}_1p[0][0][4M]$ | $d^3{}_2p[0][0][4M]$ | $d^3{}_0p[0][1][4M]$ | $d^3{}_1p[0][1][4M]$ | $d^3{}_2p[0][1][4M]$ |
|---|---|---|---|---|---|
| $d^3{}_0p[0][2][4M]$ | $d^3{}_1p[0][2][4M]$ | $d^3{}_2p[0][2][4M]$ | $d^3{}_0p[0][3][4M]$ | $d^3{}_1p[0][3][4M]$ | $d^3{}_2p[0][3][4M]$ |
| $d^3{}_0v[0][0][4M]$ | $d^3{}_1v[0][0][4M]$ | $d^3{}_2v[0][0][4M]$ | $d^3{}_0v[0][1][4M]$ | $d^3{}_1v[0][1][4M]$ | $d^3{}_2v[0][1][4M]$ |
| $d^3{}_0v[0][2][4M]$ | $d^3{}_1v[0][2][4M]$ | $d^3{}_2v[0][2][4M]$ | $d^3{}_0v[0][3][4M]$ | $d^3{}_1v[0][3][4M]$ | $d^3{}_2v[0][3][4M]$ |

| $d^2{}_0p[1][4M]$ | $d^2{}_1p[1][4M]$ | $d^2{}_2p[1][4M]$ | $d^2{}_0v[1][4M]$ | $d^2{}_1v[1][4M]$ | $d^2{}_2v[1][4M]$ |
|---|---|---|---|---|---|

| $d^3{}_0p[1][0][4M]$ | $d^3{}_1p[1][0][4M]$ | $d^3{}_2p[1][0][4M]$ | $d^3{}_0p[1][1][4M]$ | $d^3{}_1p[1][1][4M]$ | $d^3{}_2p[1][1][4M]$ |
|---|---|---|---|---|---|
| $d^3{}_0p[1][2][4M]$ | $d^3{}_1p[1][2][4M]$ | $d^3{}_2p[1][2][4M]$ | $d^3{}_0p[1][3][4M]$ | $d^3{}_1p[1][3][4M]$ | $d^3{}_2p[1][3][4M]$ |
| $d^3{}_0v[1][0][4M]$ | $d^3{}_1v[1][0][4M]$ | $d^3{}_2v[1][0][4M]$ | $d^3{}_0v[1][1][4M]$ | $d^3{}_1v[1][1][4M]$ | $d^3{}_2v[1][1][4M]$ |
| $d^3{}_0v[1][2][4M]$ | $d^3{}_1v[1][2][4M]$ | $d^3{}_2v[1][2][4M]$ | $d^3{}_0v[1][3][4M]$ | $d^3{}_1v[1][3][4M]$ | $d^3{}_2v[1][3][4M]$ |

| $d^2{}_0p[2][4M]$ | $d^2{}_1p[2][4M]$ | $d^2{}_2p[2][4M]$ | $d^2{}_0v[2][4M]$ | $d^2{}_1v[2][4M]$ | $d^2{}_2v[2][4M]$ |
|---|---|---|---|---|---|

| $d^3{}_0p[2][0][4M]$ | $d^3{}_1p[2][0][4M]$ | $d^3{}_2p[2][0][4M]$ | $d^3{}_0p[2][1][4M]$ | $d^3{}_1p[2][1][4M]$ | $d^3{}_2p[2][1][4M]$ |
|---|---|---|---|---|---|
| $d^3{}_0p[2][2][4M]$ | $d^3{}_1p[2][2][4M]$ | $d^3{}_2p[2][2][4M]$ | $d^3{}_0p[2][3][4M]$ | $d^3{}_1p[2][3][4M]$ | $d^3{}_2p[2][3][4M]$ |
| $d^3{}_0v[2][0][4M]$ | $d^3{}_1v[2][0][4M]$ | $d^3{}_2v[2][0][4M]$ | $d^3{}_0v[2][1][4M]$ | $d^3{}_1v[2][1][4M]$ | $d^3{}_2v[2][1][4M]$ |
| $d^3{}_0v[2][2][4M]$ | $d^3{}_1v[2][2][4M]$ | $d^3{}_2v[2][2][4M]$ | $d^3{}_0v[2][3][4M]$ | $d^3{}_1v[2][3][4M]$ | $d^3{}_2v[2][3][4M]$ |

| $d^2{}_0p[3][4M]$ | $d^2{}_1p[3][4M]$ | $d^2{}_2p[3][4M]$ | $d^2{}_0v[3][4M]$ | $d^2{}_1v[3][4M]$ | $d^2{}_2v[3][4M]$ |
|---|---|---|---|---|---|

| $d^3{}_0p[3][0][4M]$ | $d^3{}_1p[3][0][4M]$ | $d^3{}_2p[3][0][4M]$ | $d^3{}_0p[3][1][4M]$ | $d^3{}_1p[3][1][4M]$ | $d^3{}_2p[3][1][4M]$ |
|---|---|---|---|---|---|
| $d^3{}_0p[3][2][4M]$ | $d^3{}_1p[3][2][4M]$ | $d^3{}_2p[3][2][4M]$ | $d^3{}_0p[3][3][4M]$ | $d^3{}_1p[3][3][4M]$ | $d^3{}_2p[3][3][4M]$ |
| $d^3{}_0v[3][0][4M]$ | $d^3{}_1v[3][0][4M]$ | $d^3{}_2v[3][0][4M]$ | $d^3{}_0v[3][1][4M]$ | $d^3{}_1v[3][1][4M]$ | $d^3{}_2v[3][1][4M]$ |
| $d^3{}_0v[3][2][4M]$ | $d^3{}_1v[3][2][4M]$ | $d^3{}_2v[3][2][4M]$ | $d^3{}_0v[3][3][4M]$ | $d^3{}_1v[3][3][4M]$ | $d^3{}_2v[3][3][4M]$ |

# FIG.19

EP 1 603 342 A1

**INTERNATIONAL SEARCH REPORT**

| International application No. |
| --- |
| PCT/JP2004/002120 |

**A. CLASSIFICATION OF SUBJECT MATTER**
Int.Cl⁷ H04N7/30, 1/41, H03M7/30, H04S7/00, H04R3/00, 5/027,
           G06T17/40, 3/00, G10L19/00

According to International Patent Classification (IPC) or to both national classification and IPC

**B. FIELDS SEARCHED**

Minimum documentation searched (classification system followed by classification symbols)
   Int.Cl⁷ H04N7/30, 1/41, G06T17/40, 3/00, G10L19/00

Documentation searched other than minimum documentation to the extent that such documents are included in the fields searched
   Jitsuyo Shinan Koho           1922–1996   Jitsuyo Shinan Toroku Koho   1996–2004
   Kokai Jitsuyo Shinan Koho   1971–2004   Toroku Jitsuyo Shinan Koho   1994–2004

Electronic data base consulted during the international search (name of data base and, where practicable, search terms used)
   JOIS, IEEE

**C. DOCUMENTS CONSIDERED TO BE RELEVANT**

| Category* | Citation of document, with indication, where appropriate, of the relevant passages | Relevant to claim No. |
| --- | --- | --- |
| Y | JP 2001-500676 A  (Interval Research Corp.), 16 January, 2001 (16.01.01), Full text & WO 97/32281 A1         & AU 2194897 A & EP 883864 A            & US 6144773 A1 & DE 69715160 T | 1-21 |
| Y | Georges Pierre Bonneau, "Optimal Triangular Haar Bases for Spherical Data", USA, Proceedings IEEE Visualization 1999, 1999, pages 279 to 284, 534 | 1-21 |
| Y | Gregory M.Nielson et al., "Haar Wavelets over Triangular Domains with Applications to Multiresolution Models for Flow over a Sphere", USA, Proceedings IEEE Visualization 1997, November, 1997, pages 143 to 149 | 1-21 |

☒ Further documents are listed in the continuation of Box C.     ☐ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 25 May, 2004 (25.05.04) | 15 June, 2004 (15.06.04) |

| Name and mailing address of the ISA/ | Authorized officer |
| --- | --- |
| Japanese Patent Office | |
| Facsimile No. | Telephone No. |

Form PCT/ISA/210 (second sheet) (January 2004)

**INTERNATIONAL SEARCH REPORT**

| International application No. |
| --- |
| PCT/JP2004/002120 |

C (Continuation).   DOCUMENTS CONSIDERED TO BE RELEVANT

| Category* | Citation of document, with indication, where appropriate, of the relevant passages | Relevant to claim No. |
| --- | --- | --- |
| Y | JP 2001-197500 A  (Sharp Corp.),<br>19 July, 2001 (19.07.01),<br>Page 3, column 3, lines 31 to 37; page 9,<br>column 15, line 40 to column 16, line 6; Fig. 3<br>& WO 99/016249 A1        & CA 2303514 A<br>& CA 2400487 A          & CA 2400496 A<br>& EP 1017238 A1          & CN 1278981 T<br>& JP 2002-359745 A | 1-6,9-21 |
| Y | JP 2002-159097 A  (Shin'ichi SAKAMOTO, Hideki<br>TACHIBANA),<br>31 May, 2002 (31.05.02),<br>Page 5, column 8, line 27 to page 6, column 9,<br>line 18<br>(Family: none) | 7,8 |

Form PCT/ISA/210 (continuation of second sheet) (January 2004)